# EUROPÄISCHE PATENTSCHRIFT

(11) **EP 2 467 419 B1**
(45) Veröffentlichungstag und Bekanntmachung des Hinweises auf die Patenterteilung: **11.10.2017**
(21) Anmeldenummer: 10744907.6
(22) Anmeldetag: 12.08.2010
(51) Int. Cl.: C08J 7/04, B32B 27/22, C08L 75/04

(54) **VERWENDUNG VON POLYELEKTROLYTKOMPLEXEN ALS WEICHMACHERBARRIERE**
USE OF POLYELECTROLTE COMPLEXES AS BARRIER FOR PLASTICIZERS
UTILISATION DE COMPLEXES POLYELECROLYTES EN TANT QUE BARRIÈRES POUR AGENTS PLASTIFIANTS

(30) Priorität: 20.08.2009 EP 09168235
(43) Veröffentlichungstag der Anmeldung: 27.06.2012
(73) Patentinhaber: BASF SE, 67056 Ludwigshafen am Rhein (DE)
(72) Erfinder: CIMPEANU, Carmen-Elena, 67059 Ludwigshafen (DE); BREINER, Thomas, 69514 Laudenbach (DE); URBAN, Dieter, 67346 Speyer (DE); SCHUMACHER, Karl-Heinz, 67433 Neustadt (DE); WEISS, Axel, 67346 Speyer (DE); MEYER, Axel, 69115 Heidelberg (DE); ROY, Soumyajit, 700106 Calcutta (IN)
(74) Vertreter: BASF IP Association
(86) Internationale Anmeldenummer: PCT/EP2010/061759
(87) Internationale Veröffentlichungsnummer: WO 2011/020769

(56) Entgegenhaltungen:
- WO-A1-2006/015080
- DE-A1- 19 841 404
- DE-A1- 19 852 584
- US-A- 6 060 410
- US-A1- 2007 224 414
- US-A1- 2009 054 584

## Beschreibung

Die Erfindung betrifft die Verwendung von Polyelektrolytkomplexen, die gebildet sind aus anionischem Polymer und kationischem Polymer, als Weichmacherbarriere, sowie weichmacherhaltige Substrate und deren Herstellung, wobei die weichmacherhaltigen Substrate beschichtet sind mit mindestens einer Schicht, welche mindestens einen Polyelektrolytkomplex aufweist.

Um Polymerfolien oder anderen, aus organischen Polymeren hergestellten Materialien die gewünschte Flexibilität zu verleihen, enthalten diese Materialien häufig sogenannte Weichmacher. Weichmacher sind bestimmte, flüssige oder feste, indifferente organische Substanzen mit geringem Dampfdruck, überwiegend solche esterartiger Natur, welche ohne chemische Reaktion, vorzugsweise durch ihr Löse- und Quellvermögen, unter Umständen aber auch ohne ein solches, mit hochpolymeren Stoffen in physikalische Wechselwirkung treten und ein homogenes System mit diesen bilden können. Weichmacher verleihen den mit ihnen hergestellten Gebilden bzw. Überzügen bestimmte angestrebte physikalische Eigenschaften, wie z.B. erniedrigte Einfriertemperatur, erhöhtes Formveränderungsvermögen, erhöhte elastische Eigenschaften oder verringerte Härte. Sie gehören zu den Kunststoffadditiven. Sie werden in ein Material eingebracht, um dessen Bearbeitbarkeit, Flexibilität und Dehnungsvermögen zu verbessern wie z.B. in Weich-PVC. Bekannte, typische Weichmacher sind z.B. Phthalsäureester, Trimellitsäureester mit (überwiegend) linearen C₆- bis C₁₁-Alkoholen oder Dicarbonsäurediester.

Eine besondere, bei der Anwendung von weichgemachten Kunststoffen auftretende, häufig unerwünschte Eigenschaft der Weichmacher ist ihre Fähigkeit zur Migration, die durch Diffusions-, Dampfdruck- und Konvektionsvorgänge zustande kommt, und die sich vor allem bei Berührung des Kunststoffs mit anderen flüssigen oder festen Stoffen bemerkbar macht. Der Weichmacher dringt dabei in den anderen Stoff (meist sind es andere polymere Kunststoffe) ein. Dieser wird angelöst, korrodiert oder es treten Quellerscheinungen und schließlich sogar ein Ankleben an der Oberfläche des Kontaktstoffes auf. Mit der Temperatur nimmt die Migrationsgeschwindigkeit rasch zu. Bei Klebeanwendungen kann eine Migration von Weichmachern in die Klebstoffschicht zu einer unerwünschten Herabsetzung der Haftkräfte, insbesondere bei höheren Temperaturen führen. Die Weichmacher-Migration spielt auch für die physiologische Unbedenklichkeit von Lebensmittelverpackungen eine Rolle.
In der US 2009/0054584 werden Substrate beschrieben aus PVC und flüssigem Weichmacher, die beschichtet sind mit einer Barriereschicht, die ein Ionomer (ionisches Polymer) enthalten. In der US 2007/224414 wird eine Schutzbeschichtung für Weichmacher enthaltende Dachdeckungsschichten beschrieben. Die Schutzschicht enthält Acrylharze und Fluorpolymere.

In der Automobilindustrie werden PVC-Folien mit einem Weichmacheranteil von bis zu 50 Gew.% (insbesondere Phthalsäureester) zur technischen Kaschierung von ABS-Substraten(Acrylnitril/Butadien/Styrol Copolymere) verwendet. Hierfür eingesetzte Klebstoffe sind z.B. polyesterbasierte Polyurethandispersionen, welche auf das Substrat aufgesprüht, getrocknet und zur eigentlichen Verklebung in einer Presse durch Wärme aktiviert werden. Wünschenswert ist ein Einsatz von mit Klebstoff bereits vorbeschichteten Folien, um die Kaschierarbeit erheblich zu vereinfachen. Bei Lagerung einer solchen Folie kann allerdings eine Migration des Weichmachers aus der PVC-Folie in die Klebstoffschicht erfolgen, was eine spätere Verklebung stark beeinträchtigt. Es ist daher wünschenswert, der Weichmachermigration aus einem weichmacherhaltigen Material an dessen Oberfläche bzw. in angrenzende Schichten und Materialien entgegenzuwirken. Aufgabe der vorliegenden Erfindung war es, der Weichmachermigration aus einem weichmacherhaltigen Material an dessen Oberfläche bzw. in angrenzende Schichten und Materialien entgegenzuwirken.

Es wurde gefunden, dass Polyelektrolytkomplexe eine hohe Wirksamkeit als Weichmacherbarriere besitzen. Gegenstand der Erfindung ist daher die Verwendung von Polyelektrolytkomplexen als Weichmacherbarriere zur zumindest teilweisen Beschichtung mit mindestens einer Schicht auf der Oberfläche eines weichmacherhaltigen Substrates. Die Polyelektrolytkomplexe sind gebildet aus mindestens einem anionischen Polymer und mindestens einem kationischen Polymer.

Gegenstand der Erfindung ist auch ein weichmacherhaltiges Substrat, dessen Oberfläche zumindest teilweise mit mindestens einer Schicht, welche mindestens einen Polyelektrolytkomplex aufweist, beschichtet ist. Die mit dem Polyelektrolytkomplex hergestellte Beschichtung weist Weichmacherbarriereeigenschaften auf.

Der Begriff "Weichmacherbarriere" bedeutet eine gegenüber unbeschichtetem Substrat erhöhte Resistenz einer Substratoberfläche gegenüber dem Eindringen von Weichmachern.

Gegenstand der Erfindung ist auch ein Verfahren zur Herstellung von weichmacherhaltigen Produkten mit Weichmacherbarriere, wobei
(i) ein Substrat aus Weichmacher enthaltenden Material bereitgestellt wird, und
(ii) das Substrat ganz oder teilweise mit einer oder mehreren Schichten versehen wird, welche mindestens einen Polyelektrolytkomplex aufweisen, wobei der Polyelektrolytkomplex gebildet ist aus mindestens einem anionischen Polymer und mindestens einem kationischen Polymer.

In einer Ausführungsform des Verfahrens kann die Beschichtung mit dem Polyelektrolytkomplex mit einer mindestens einen, zuvor hergestellten Polyelektrolytkomplex enthaltenden Zusammensetzung erfolgen. Bei der einen zuvor hergestellten Polyelektrolytkomplex enthaltenden Zusammensetzung handelt es sich vorzugweise um eine durch Wasser-in-Wasser Emulsionspolymerisation herstellbare wässrige Dispersion.

In einer weiteren Ausführungsform des Verfahrens kann die Beschichtung mit dem Polyelektrolytkomplex dadurch erfolgen, dass der Polyelektrolytkomplex erst auf dem Substrat gebildet wird. Dies kann in der Weise erfolgen, dass das Substrat mit einer ersten Beschichtung und mit einer mit der ersten Beschichtung in unmittelbarem Kontakt kommenden zweiten Beschichtung versehen wird, wobei eine der Beschichtungen mindestens ein anionisches Polymer enthält und die andere Beschichtung mindestens ein kationisches Polymer enthält und der Polyelektrolytkomplex aus anionischem Polymer und kationischem Polymer erst auf dem Substrat gebildet wird. Die zwei Beschichtungszusammensetzungen können gleichzeitig oder in einem Arbeitsschritt unmittelbar nacheinander aufgetragen werden, wobei eine der Beschichtungszusammensetzungen das anionische Polymer enthält und die andere Beschichtungszusammensetzung das kationische Polymer enthält.

Polyelektrolyte sind ionische Polymere. Polyelektrolytkomplexe sind die Reaktionsprodukte von gegensätzlich geladenen ionischen Polymeren. In der Regel haben die Polyelektrolytkomplexe eine definierte stöchiometrische Zusammensetzung, d.h. das Äquivalentverhältnis von anionischen und kationischen Gruppen in diesen Komplexen liegt bei oder in der Nähe von 1. Die Polyelektrolytkomplexe können aber auch überwiegend anionisch oder überwiegend kationisch geladen sein. Erfindungsgemäß kann auch neben solchen Polyelektrolytkomplexen ein kationisches oder ein anionisches Polymer zusätzlich im Überschuss, d.h. in freier, nicht komplexierter Form vorhanden sein.

Anionische Polymere sind Polymere mit anionischen Gruppen, insbesondere organische Polymere mit Carboxylat-, Phosphat-, Sulfonat- oder Sulfatgruppen. Es können auch die entsprechenden Säuren eingesetzt werden, sofern sie entweder durch im Reaktionsmedium enthaltene Basen neutralisiert werden oder durch basische Gruppen des kationischen Polymers in anionische Gruppen umgewandelt werden. Geeignete anionische Polymere sind z.B. solche, gebildet durch radikalische Polymerisation von ethylenisch ungesättigten, radikalisch polymerisierbaren anionischen Monomeren. Hiervon umfasst sind auch Copolymere aus mindestens einem anionischen Monomer und einem oder mehreren verschiedenen nichtionischen copolymerisierbaren Monomeren.

Als ethylenisch ungesättigte anionische Monomere kommen beispielsweise monoethylenisch ungesättigte C₃- bis C₁₀- oder C₃- bis C₅-Carbonsäuren wie Acrylsäure, Methacrylsäure, Ethacrylsäure, Crotonsäure, Maleinsäure, Fumarsäure, Vinylsulfonsäure, Styrolsulfonsäure, Acrylamidomethylpropansulfonsäure, Vinylphosphonsäure, Itaconsäure und die Alkalimetall-, Erdalkalimetall- oder Ammoniumsalze dieser Säuren in Betracht. Zu den bevorzugt eingesetzten anionischen Monomeren gehören Acrylsäure, Methacrylsäure, Maleinsäure und 2-Acrylamido-2-methylpropansulfonsäure. Besonders bevorzugt sind wässrige Dispersionen von Polymerisaten auf Basis von Acrylsäure. Die anionischen Monomeren können entweder allein zu Homopolymerisaten oder auch in Mischung untereinander zu Copolymerisaten polymerisiert werden. Beispiele hierfür sind die Homopolymerisate der Acrylsäure, Homopolymerisate der Methacrylsäure oder Copolymerisate aus Acrylsäure und Maleinsäure, Copolymerisate aus Acrylsäure und Methacrylsäure sowie Copolymerisate aus Methacrylsäure und Maleinsäure.

Die Polymerisation der anionischen Monomeren kann jedoch auch in Gegenwart mindestens eines anderen ethylenisch ungesättigten Monomeren durchgeführt werden. Diese Monomeren können nichtionisch sein oder aber eine kationische Ladung tragen. Beispiele für nichtionische Comonomere sind Acrylamid, Methacrylamid, N-C₁- bis C₃-Alkylacrylamide, N-Vinylformamid, Acrylsäureester von einwertigen Alkoholen mit 1 bis 20 C-Atomen wie insbesondere Methylacrylat, Ethylacrylat, Isobutylacrylat und n-Butylacrylat, Methacrylsäureester von einwertigen Alkoholen mit 1 bis 20 C-Atomen z.B. Methylmethacrylat und Ethylmethacrylat, sowie Vinylacetat und Vinylpropionat. Geeignete kationische Monomere, die mit den anionischen Monomeren copolymerisierbar sind, sind Dialkylaminoethylacrylate, Dialkylaminoethylmethacrylate, Dialkylaminopropylacrylate, Dialkylaminopropylmethacrylate, Dialkylaminoethylacrylamide, Dialkylaminoethylmethacrylamide, Dialkylaminopropylacrylamide, Dialkylaminopropylmethacrylamide, Diallyldimethylammoniumchlorid, Vinylimidazol sowie die jeweils mit Säuren neutralisierten und/oder quaternierten basischen Monomeren. Einzelne Beispiele für kationische Monomere sind Dimethylaminoethylacrylat, Dimethylaminoethylmethacrylat, Diethylaminoethylacrylat, Diethylaminoethylmethacrylat, Dimethylaminopropylacrylat, Dimethylaminopropylmethacrylat, Diethylaminopropylacrylat und Diethylaminopropylmethacrylat, Dimethyaminoethylacrylamid, Dimethylaminoethylmethacrylamid, Dimethylaminopropylacrylamid, Dimethylaminopropylmethacrylamid, Diethylaminoethylacrylamid und Diethylaminopropylacrylamid. Die basischen Monomeren können vollständig oder auch nur teilweise neutralisiert bzw. quaterniert sein, z.B. jeweils zu 1 bis 99 %. Bevorzugt eingesetztes Quaternierungsmittel für die basischen Monomeren ist Dimethylsulfat. Man kann die Quaternierung der Monomeren jedoch auch mit Diethylsulfat oder mit Alkylhalogeniden wie Methylchlorid, Ethylchlorid oder Benzylchlorid durchführen. Die kationischen Monomeren werden höchstens in einer Menge eingesetzt, dass die entstehenden amphoteren Polymere einen Überschuss an Säuregruppen gegenüber Amingruppen bzw. eine anionische Überschussladung tragen. Der Säureüberschuss bzw. die anionische Überschussladung in den entstehenden amphoteren Polymeren beträgt z.B. mindestens 5 Mol-%, vorzugsweise mindestens 10 Mol-%. Die Comonomere werden bei der Herstellung der anionischen Polymere beispielsweise in solchen Mengen eingesetzt, dass die entstehenden Polymere beim Verdünnen mit Wasser und bei pH-Werten oberhalb von 7,0 und einer Temperatur von 20°C wasserlöslich sind und eine anionische Ladung aufweisen. Bezogen auf die bei der Polymerisation insgesamt eingesetzten Monomeren beträgt die Menge an nichtionischen und/oder kationischen Comonomeren z.B. 0 bis 99, vorzugsweise 5 bis 75 Gew.-% und liegt meistens in dem Bereich von 5 bis 25 Gew.%.

Beispiele für bevorzugte Copolymere sind Copolymerisate aus 25 bis 99 Gew.-% Acrylsäure und 75 bis 1 Gew.-% Acrylamid. Vorzugsweise polymerisiert man mindestens eine ethylenisch ungesättigte C₃ bis C₅-Carbonsäure in Abwesenheit von anderen monoethylenisch ungesättigten Monomeren. Besonders bevorzugt sind Homopolymerisate von Acrylsäure, die durch radikalische Polymerisation von Acrylsäure in Abwesenheit von anderen Monomeren erhältlich sind.

In einer Ausführungsform enthält das anionische Polymer 2-Acrylamido-2-methyl-propansulfonsäure (AMPS). Bevorzugt ist Acrylsäure copolymerisiert mit AMPS. Die AMPS-Menge kann dabei beispielsweise von 0,1 bis 20 mol% oder von 0,1 bis 15 mol% oder von 0,5 bis 10 mol%, bezogen auf die Menge aller Monomere betragen.

Die Polymerisation kann zusätzlich in Gegenwart mindestens eines Vernetzers durchgeführt werden. Man erhält dann Copolymere mit einer höheren Molmasse als beim Polymerisieren der anionischen Monomeren in Abwesenheit eines Vernetzers. Der Einbau eines Vernetzers in die Polymeren führt außerdem zu einer verringerten Löslichkeit der Polymeren in Wasser. In Abhängigkeit von der Menge an einpolymerisiertem Vernetzer werden die Polymeren wasserunlöslich, sind jedoch in Wasser quellbar. Als Vernetzer können alle Verbindungen verwendet werden, die über mindestens zwei ethylenisch ungesättigte Doppelbindungen im Molekül verfügen. Beispiele für Vernetzer sind Triallylamin, Pentaerythrittriallylether, Pentaerythrittetraallylether, Methylenbisacrylamid, N,N'-Divinylethylenharnstoff, mindestens zwei Allylgruppen enthaltende Allylether oder mindestens zwei Vinylgruppen aufweisende Vinylether von mehrwertigen Alkoholen wie z.B. Sorbitol, 1,2-Ethandiol, 1,4-Butandiol, Trimethylolpropan, Glycerin, Diethylenglykol und von Zuckern wie Saccharose, Glucose, Mannose, vollständig mit Acrylsäure oder Methacrylsäure veresterte zweiwertige Alkohole mit 2 bis 4 C-Atomen wie Ethylenglykoldimethacrylat, Ethylenglykoldiacrylat, Butandioldimethacrylat, Butandioldiacrylat, Diacrylate oder Dimethacrylate von Polyethylenglykolen mit Molekulargewichten von 300 bis 600, ethoxylierte Trimethylenpropantriacrylate oder ethoxylierte Trimethylenpropantrimethacrylate, 2,2-Bis(hydroxymethyl)butanoltrimethacrylat, Pentaerythrittriacrylat, Pentaerythrittetraacrylat und Triallylmethylammoniumchlorid. Falls bei der Herstellung der erfindungsgemäßen Dispersionen Vernetzer eingesetzt werden, so betragen die jeweils verwendeten Mengen an Vernetzer beispielsweise 0,0005 bis 5,0, vorzugsweise 0,001 bis 1,0 Gew.-%, bezogen auf die bei der Polymerisation insgesamt eingesetzten Monomeren. Bevorzugt verwendete Vernetzer sind Pentaerythrittriallylether, Pentaerythrittetraallylether, N,N'-Divinylethylenharnstoff, mindestens zwei Allylgruppen enthaltende Allylether von Zuckern wie Saccharose, Glucose oder Mannose und Triallylamin sowie Mischungen dieser Verbindungen.

Falls die Polymerisation mindestens eines anionischen Monomeren in Gegenwart mindestens eines Vernetzers durchgeführt wird, stellt man vorzugsweise vernetzte Copolymerisate aus Acrylsäure und/oder Methacrylsäure her, indem man Acrylsäure und/oder Methacrylsäure in Gegenwart von Pentaerythrittriallylether, Pentaerythrittetraallylether, N,N'-Divinylethylenharnstoff, mindestens zwei Allylgruppen enthaltende Allylether von Zuckern wie Saccharose, Glucose oder Mannose oder Triallylamin sowie Mischungen dieser Verbindungen polymerisiert.

Die zur Bildung der Polyelektrolytkomplexe verwendeten kationischen Polymere sind vorzugsweise wasserlöslich, d.h. sie haben eine Löslichkeit in Wasser von mindestens 1 g/l bei 20°C. Kationische Polymere sind Polymere mit kationischen Gruppen, insbesondere organische Polymere mit quaternären Ammoniumgruppen. Es können auch Polymere mit primären, sekundären oder tertiären Amingruppen eingesetzt werden, sofern sie entweder durch im Reaktionsmedium enthaltene Säuren oder durch Säuregruppen des anionischen Polymers protoniert und so in kationische Gruppen umgewandelt werden. Die Amin- bzw. Ammoniumgruppen des kationischen Polymers können dabei als Substituenten oder als Teil der Polymerkette vorliegen. Sie können auch Teil eines aromatischen oder nicht-aromatischen Ringsystems sein.

Geeignete kationische Polymere sind z.B. Polymere aus der Gruppe der
(a) Vinylimidazoliumeinheiten enthaltende Polymere,
(b) Polydiallyldimethylammoniumhalogenide,
(c) Vinylamineinheiten enthaltende Polymere,
(d) Ethylenimineinheiten enthaltende Polymere,
(e) Dialkylaminoalkylacrylat- und/oder Dialkylaminoalkylmethacrylateinheiten enthaltende Polymere und
(f) Dialkylaminoalkylacrylamid- und/oder Dialkylaminoalkylmethacrylamideinheiten enthaltende Polymere.

Beispiele für kationische Polymere sind
(a) Homopolymerisate von Vinylimidazoliummethosulfat und/oder Copolymerisate aus Vinylimidazoliummethosulfat und N-Vinylpyrrolidon,
(b) Polydiallyldimethylammoniumchloride,
(c) Polyvinylamine,
(d) Polyethylenimine
(e) Polydimethylaminoethylacrylat, Polydimethylaminoethylmethacrylat, Copolymerisate aus Acrylamid und Dimethylaminoethylacrylat und Copolymerisate aus Acrylamid und Dimethylaminoethylmethacrylat, wobei die basischen Monomeren auch in Form der Salze mit Mineralsäuren oder in quaternierter Form vorliegen können,und
(f) Polydimethylaminoethylacrylamid, Polydimethylaminoethylmethacrylamid und Copolymerisate aus Acrylamid und Dimethylaminoethylacrylamid.

Die basischen Monomeren können auch in Form der Salze mit Mineralsäuren oder in quaternierter Form vorliegen. Die mittleren Molmassen M_{w} der kationischen Polymeren betragen mindestens 500. Sie liegen beispielsweise in dem Bereich von 500 bis 1 Million, vorzugsweise von 1 000 bis 500 000 oder 2 000 bis 100 000.

Vorzugsweise verwendet man als kationische Polymere
(a) Homopolymerisate von Vinylimidazoliummethosulfat und/oder Copolymerisaten aus Vinylimidazoliummethosulfat und N-Vinylpyrrolidon mit einer mittleren Molmasse M_{w} von jeweils 500 bis 500 000,
(b) Polydiallyldimethylammoniumchloride mit einer mittleren Molmasse M_{w} von 1000 bis 500 000,
(c) Polyvinylamine mit einer mittleren Molmasse M_{w} von 500 bis 1 Million und
(d) Polyethylenimine mit einer mittleren Molmasse M_{w} von 500 bis 1 Million.

Die unter (a) aufgeführten Copolymerisate aus Vinylimidazoliummethosulfat und N-Vinylpyrrolidon enthalten beispielsweise 10 bis 90 Gew.-% N-Vinylpyrrolidon einpolymerisiert. Anstelle von N-Vinylpyrrolidon kann man als Comonomer mindestens eine Verbindung aus der Gruppe der ethylenisch ungesättigten C₃- bis C₅-Carbonsäuren wie insbesondere Acrylsäure oder Methacrylsäure oder die Ester dieser Carbonsäuren mit 1 bis 18 C-Atome enthaltenden einwertigen Alkoholen wie Methylacrylat, Ethylacrylat, Isopropylacrylat, n-Butylacrylat, Isobutylacrylat, Methylmethacrylat, Ethylmethacrylat oder n-Butylmethacrylat einsetzen.

Als Polymere der Gruppe (b) kommt vorzugsweise Polydiallyldimethylammoniumchlorid in Betracht. Außerdem eignen sich Copolymerisate aus Diallyldimethylammoniumchlorid und Dimethylaminoethylacrylat, Copolymerisate aus Diallyldimethylammoniumchlorid und Dimethylaminoethylmethacrylat, Copolymerisate aus Diallyldimethylammoniumchlorid und Diethylaminoethylacrylat, Copolymerisate aus Diallyldimethylammoniumchlorid und Dimethylaminopropylacrylat, Copolymerisate aus Diallyldimethylammoniumchlorid und Dimethylaminoethylacrylamid und Copolymerisate aus Diallyldimethylammoniumchlorid und Dimethylaminopropylacrylamid. Die Copolymerisate von Diallyldimethylammoniumchlorid enthalten beispielsweise 1 bis 50, meistens 2 bis 30 Mol-% mindestens eines der genannten Comonomeren einpolymerisiert.

Vinylamineinheiten enthaltende Polymere (c) sind erhältlich durch Polymerisieren von N-Vinylformamid gegebenenfalls in Gegenwart von Comonomeren und Hydrolyse der Vinylformamidpolymeren unter Abspaltung von Formylgruppen unter Bildung von Aminogruppen. Der Hydrolysegrad der Polymeren kann beispielsweise 1 bis 100 % betragen und liegt meistens in dem Bereich von 60 bis 100 %. Die mittleren Molmassen M_{w} betragen bis zu 1 Million. Vinylamineinheiten enthaltende Polymere werden beispielsweise als Catiofast® Marken von BASF SE vertrieben.

Ethylenimineinheiten enthaltende Polymere der Gruppe (d) wie Polyethylenimine sind ebenfalls Handelsprodukte. Sie werden beispielsweise unter der Bezeichnung Polymin® von BASF SE verkauft z.B. Polymin® SK. Bei diesen kationischen Polymeren handelt es sich Polymere von Ethylenimin, die durch Polymerisieren von Ethylenimin in wässrigem Medium in Gegenwart geringer Mengen an Säuren oder säurebildenden Verbindungen wie halogenierten Kohlenwasserstoffen z.B. Chloroform, Tetrachlorkohlenstoff, Tetrachlorethan oder Ethylchlorid hergestellt werden oder um Kondensationsprodukte aus Epichlorhydrin und Aminogruppen enthaltenden Verbindungen wie Mono- und Polyaminen z.B. Dimethylamin, Diethylamin, Ethylendiamin, Diethylentriamin und Triethylentetramin oder Ammoniak. Sie haben beispielsweise Molmassen M_{w} von 500 bis 1 Million, vorzugsweise 1000 bis 500 000.

Zu dieser Gruppe von kationischen Polymeren gehören auch Pfropfpolymerisate von Ethylenimin auf Verbindungen, die eine primäre oder sekundäre Aminogruppe aufweisen, z.B. Polyamidoamine aus Dicarbonsäuren und Polyaminen. Die mit Ethylenimin gepfropften Polyamidoamine können gegebenenfalls noch mit bifunktionellen Vernetzer umgesetzt werden, beispielsweise mit Epichlorhydrin oder Bis-chlorhydrinethern von Polyalkylenglykolen.

Als kationische Polymere der Gruppe (e) kommen Dialkylaminoalkylacrylat- und/oder Dialkylaminoalkylmethacrylateinheiten enthaltende Polymere in Betracht. Diese Monomeren können in Form der freien Basen, vorzugsweise jedoch in Form der Salze mit Mineralsäuren wie Salzsäure, Schwefelsäure oder Phosphorsäure sowie in quaternierter Form bei der Polymerisation eingesetzt werden. Als Quaternierungsmittel kommen beispielsweise Dimethylsulfat, Diethylsulfat, Methylchlorid, Ethylchlorid, Cetylchlorid oder Benzylchlorid in Betracht. Aus diesen Monomeren können sowohl Homopolymerisate als auch Copolymerisate hergestellt werden. Als Comonomere eignen sich beispielsweise Acrylamid, Methacrylamid, N-Vinylformamid, N-Vinylpyrrolidon, Methylacrylat, Ethylacrylat, Methylmethacrylat und Mischungen der genannten Monomeren.

Kationische Polymere der Gruppe (f) sind Dimethylaminoethylacrylamid- oder Dimethylaminoethylmethacrylamid-Einheiten enthaltende Polymerisate, die die basischen Monomeren vorzugsweise in Form der Salze mit Mineralsäuren oder in quaternierter Form enthalten. Hierbei kann es sich um Homopolymerisate und um Copolymerisate handeln. Beispiele sind Homopolymere von Dimethylaminoehtylacrylamid, das mit Dimethylsulfat oder mit Benzylchlorid vollständig quaterniert ist, Homopolymere von Dimethylaminoethylmethacrylamid, das mit Dimethylsulfat, Methylchlorid, Ethylchlorid oder Benzylchlorid vollständig quaterniert ist sowie Copolymerisate aus Acrylamid und mit Dimethylsulfat quaterniertes Dimethylaminoethylacrylamid.

Bei der Herstellung der erfindungsgemäßen wässrigen Dispersionen werden folgende kationische Polymere vorzugsweise eingesetzt:
(a) Homopolymerisate von Vinylimidazoliummethosulfat und/oder Copolymerisate aus Vinylimidazoliummethosulfat und N-Vinylpyrrolidon mit einer mittleren Molmasse M_{w} von jeweils 1 000 bis 100 000,
(b) Polydiallyldimethylammoniumchloride mit einer mittleren Molmasse M_{w} von 2000 bis 100 000 und/oder
(c) Polyvinylamine mit einer mittleren Molmasse M_{w} von 1000 bis 500 000. Die Polyvinylamine werden vorzugsweise in Form der Salze mit Schwefelsäure oder Salzsäure eingesetzt.

Außer solchen Polymerisaten, die allein aus kationischen Monomeren aufgebaut sind, können auch amphotere Polymere als kationische Polymere unter der Voraussetzung eingesetzt werden, dass sie insgesamt eine kationische Ladung tragen. Die kationische Überschussladung in den amphoteren Polymerisaten beträgt beispielsweise mindestens 5 Mol-%, vorzugsweise mindestens 10 Mol-% und liegt meistens in dem Bereich von 15 bis 95 Mol-%. Beispiele für amphotere Polymere mit einer kationischen Überschussladung sind
- Copolymerisate aus Acrylamid, Dimethylaminoethylacrylat und Acrylsäure, die mindestens 5 Mol-% mehr Dimethylaminoethylacrylat als Acrylsäure einpolymerisiert enthalten;
- Copolymerisate aus Vinylimidazoliummethosulfat, N-Vinylpyrrolidon und Acrylsäure, die mindestens 5 Mol-% mehr Vinylimidazoliummethosulfat als Acrylsäure einpolymerisiert enthalten;
- hydrolysierte Copolymerisate aus N-Vinylformamid und einer ethylenisch ungesättigten C₃- bis C₅-Carbonsäure, vorzugsweise Acrylsäure oder Methacrylsäure, mit einem um mindestens 5 Mol-% höheren Gehalt an Vinylamineinheiten als Einheiten an ethylenisch ungesättigten Carbonsäuren;
- Copolymerisate aus Vinylimidazol, Acrylamid und Acrylsäure, wobei der pH-Wert so gewählt ist, dass mindestens 5 Mol% mehr Vinylimidazol kationisch geladen ist, als Acrylsäure einpolymerisiert ist.

In einer Ausführungsform der Erfindung werden wässrige Dispersionen von Polyelektrolytkomplexen eingesetzt. Kationische Polymere und anionische Polymere neigen häufig dazu, in Wasser zu koagulieren und auszufallen. Bei den erfindungsgemäß einsetzbaren wässrigen Dispersionen von Polyelektrolytkomplexen handelt es sich um stabile, nicht koagulierte Systeme, beispielsweise herstellbar durch sogenannte Wasser-in-Wasser Emulsionspolymerisation. Die Polyelektrolytkomplexe sind vorzugsweise überwiegend anionisch geladen. Stabile wässrige Dispersionen von Polyelektrolytkomplexen können hergestellt werden, indem man die in Betracht kommenden anionischen Monomeren, gegebenenfalls in Gegenwart von anderen Monomeren, in wässrigem Medium in Gegenwart von kationischen Polymeren radikalisch polymerisiert. Falls die anderen, nicht anionischen Monomere auch basische bzw. kationische Monomere umfassen, so wird deren Menge so gewählt, dass die entstehenden Polymerkomplexe einen Überschuss an anionischer Ladung tragen (bei pH 7 und 20°C). Die Bestimmung der Ladungsdichte der Polyelektrolyte bzw. Polyelektrolytkomplexe kann nach D. Horn, Progr. Colloid & Polymer Sci., Band 65, 251 -264 (1978) erfolgen. Basische Polymere werden vorzugsweise in Form der Salze mit Mineralsäuren oder organischen Säuren wie Ameisensäure oder Essigsäure bei der Polymerisation eingesetzt. Diese Salze bilden sich sonst ohnehin bei der Polymerisation, weil die Polymerisation bei einem pH-Wert < 6,0 durchgeführt wird.

In einer Ausführungsform der Erfindung werden die anionischen Monomeren in einer Menge eingesetzt, dass die Anzahl der anionischen Gruppen der anionischen Monomeren die Anzahl der kationischen Gruppen in den kationischen Polymeren um mindestens 1 Mol-% übersteigt, gemessen bei pH 7 und 20°C. Ein geeignetes Herstellungsverfahren ist z.B. beschrieben in der DE 10 2005 007 483.

Die Menge an kationischem Polymer, das zur Herstellung des Polyelektrolytkomplexes verwendet wird, wird vorzugsweise so bemessen, dass man pro Mol der anionischen Gruppen des anionischen Polymers bzw. in den insgesamt bei der Polymerisation eingesetzten anionischen Monomeren beispielsweise bis zu 150 mol% oder bis zu 100 mol%, vorzugsweise 1 bis 99 mol% oder 2 bis 50 mol% kationische Gruppen mindestens eines kationischen Polymers einsetzt, gemessen bei pH 7 und 20°C. Die mit weniger als 100 mol% kationischer Gruppen entstehenden Polyelektrolytkomplexe sind bei pH 7 und 20°C überwiegend anionisch geladen.

Die erfindungsgemäß bevorzugten wässrigen Dispersionen von überwiegend anionisch geladenen Polyelektrolytkomplexen können durch radikalische Polymerisation von ethylenisch ungesättigten anionischen Monomeren in wässrigem Medium in Gegenwart mindestens eines wasserlöslichen kationischen Polymers hergestellt werden, wobei man pro Mol der insgesamt bei der Polymerisation eingesetzten anionischen Monomeren vorzugsweise 0,5 bis 49 Mol-% mindestens eines kationischen Polymers einsetzt. Die Polymerisation erfolgt in wässrigem Medium bei einem pH-Wert unterhalb von 6, z.B. in dem Bereich von 0 bis 5,9, vorzugsweise 1 bis 5 und insbesondere von 1,5 bis 3. Der in Betracht kommende pH-Wert ergibt sich meistens dadurch, dass man Säuregruppen enthaltende Polymere in Form der freien Säuregruppen bei der Polymerisation einsetzt. Der pH-Wert kann durch Zugabe einer Base wie insbesondere wässriger Natronlauge oder Kalilauge zur partiellen Neutralisation der Säuregruppen der anionischen Monomeren in dem angegebenen Bereich variiert werden. Sofern man jedoch von Alkalimetall-, Erdalkalimetall- oder Ammoniumsalzen der anionischen Monomeren ausgeht, gibt man entweder eine Mineralsäure oder eine organische Säure wie Ameisensäure, Essigsäure oder Propionsäure zur Einstellung des pH-Wertes hinzu.

Die Polymerisation kann gegebenenfalls zusätzlich in Gegenwart mindestens eines Kettenüberträgers durchgeführt werden. Man erhält dann Polymere, die eine niedrigere Molmasse besitzen als ohne Kettenüberträger hergestellte Polymere. Beispiele für Kettenüberträger sind organische Verbindungen, die Schwefel in gebundener Form enthalten wie Dodecylmercaptan, Thiodiglykol, Ethylthioethanol, Di-n-butylsulfid, Di-n-octylsulfid, Diphenylsulfid, Diisopropyldisulfid, 2-Mercaptoethanol, 1,3-Mercaptopropanol, 3-Mercaptopropan-1,2-diol, 1,4-Mercaptobutanol, Thioglykolsäure, 3-Mercaptopropionsäure, Mercaptobernsteinsäure, Thioessigsäure und Thioharnstoff, Aldehyde, organische Säuren wie Ameisensäure, Natriumformiat oder Ammoniumformiat, Alkohole wie insbesondere Isopropanol sowie Phosphorverbindungen, z.B. Natriumhypophosphit. Man kann einen einzigen oder mehrere Kettenüberträger bei der Polymerisation einsetzen. Falls man sie bei der Polymerisation verwendet, setzt man sie beispielsweise in einer Menge von 0,01 bis 5,0, vorzugsweise 0,2 bis 1 Gew.-%, bezogen auf die gesamten Monomeren, ein. Die Kettenüberträger werden vorzugsweise zusammen mit mindestens einem Vernetzer bei der Polymerisation eingesetzt. Durch Variation der Menge und des Verhältnisses von Kettenüberträger und Vernetzer ist es möglich, die Rheologie der entstehenden Polymerisate zu steuern. Kettenüberträger und/oder Vernetzer können bei der Polymerisation beispielsweise im wässrigen Polymerisationsmedium vorgelegt oder zusammen oder getrennt von den Monomeren je nach Fortschreiten der Polymerisation zum Polymerisationsansatz dosiert werden.

Bei der Polymerisation verwendet man üblicherweise Initiatoren, die unter den Reaktionsbedingungen Radikale bilden. Geeignete Polymerisationsinitiatoren sind beispielsweise Peroxide, Hydroperoxide, Wasserstoffperoxid, Natrium- oder Kaliumpersulfat, Redoxkatalysatoren und Azoverbindungen wie 2,2-Azobis(N,N- dimethylenisobutyramidin) dihydrochlorid, 2,2-Azobis(4-methoxy-2,4-dimethylvaleronitril), 2,2-Azobis(2,4-dimethylvaleronitril) und 2,2-Azobis(2-amidinopropan)dihydrochlorid. Die Initiatoren werden in den bei der Polymerisation üblichen Mengen eingesetzt. Bevorzugt werden Azostarter als Polymerisationsinitiatoren verwendet. Man kann die Polymerisation jedoch auch mit Hilfe energiereicher Strahlen wie Elektronenstrahlen oder durch Bestrahlen mit UV-Licht initiieren.

Die Polymerisation zur Bildung der anionischen Polymere wird beispielsweise diskontinuierlich durchgeführt, indem man anionische Monomere und mindestens eine kationische Verbindung (z.B. das kationische Polymer) in einer Polymerisationszone vorlegt und den Polymerisationsinitiator portionsweise oder kontinuierlich dosiert. Bevorzugt wird jedoch eine semikontinuierliche Fahrweise, bei der man Wasser und Polymerisationsinitiator vorlegt und mindestens ein anionisches Monomer und mindestens ein kationisches Polymer kontinuierlich unter Polymerisationsbedingungen dosiert. Man kann jedoch auch den Initiator kontinuierlich oder portionsweise, aber getrennt vom Monomer-Zulauf und der Dosierung von kationischem Polymer in die Polymerisationszone einbringen. Man kann auch so vorgehen, dass man zunächst einen Teil der Monomeren z.B. 5 bis 10 Gew.-% zusammen mit einem entsprechenden Anteil an mindestens einem kationischen Polymer in einer Polymerisationszone vorlegt, die Polymerisation in Gegenwart eines Initiators startet und den verbliebenen Teil der Monomeren, des kationischen Polymeren und des Initiators kontinuierlich oder portionsweise zugibt. Die Polymerisation erfolgt üblicherweise in allen Fällen unter Ausschluss von Sauerstoff unter einer Inertgasatmosphäre beispielsweise unter Stickstoff oder Helium. Die Polymerisationstemperaturen liegen beispielsweise in dem Bereich von 5 bis 100°C, vorzugsweise 15 bis 90°C und meistens bei 20 bis 70°C. Die Polymerisationstemperatur hängt sehr von dem jeweiligen Initiator ab, der eingesetzt wird.

Die Konzentration der Polyelektrolytkomplexe in den zur Beschichtung eingesetzten Lösungen oder wässrigen Dispersionen beträgt vorzugsweise mindestens 1 Gew.-%, insbesondere mindestens 5 Gew.-% und bis zu 50 oder bis zu 60 Gew.%. Bevorzugt liegt der Gehalt an Polyelektrolytkomplexen in der wässrigen Dispersion bei 1 bis 40 Gew.% oder bei 5 bis 35 Gew.%, insbesondere bei 15 bis 30 Gew.-%.

Bevorzugte wässrige Dispersionen der Polyelektrolytkomplexe haben bei pH-Werten unterhalb von 6,0 und bei einer Temperatur von 20°C eine Viskosität von 100 bis 150000 mPas, oder 200 bis 5 000 mPas (gemessen mit einem Brookfield-Viskosimeter bei 20°C, 20 UpM, Spindel 4). In Abhängigkeit von den Polymerisationsbedingungen und den jeweils verwendeten Monomeren oder Kombinationen von Monomeren und Hilfsstoffen wie Kettenüberträgern haben die Polyelektrolytkomplexe unterschiedliche Molmassen. Die mittlere Molmasse M_{w} der Polyelektrolytkomplexe beträgt z.B. 1000 bis 10 Millionen, vorzugsweise 5000 bis 5 Millionen oder von 10000 bis 3 Millionen. Die Bestimmung der Molmasse erfolgt mit Hilfe der Lichtstreuung. Die mittlere Teilchengröße der dispergierten Polyelektrolytkomplexe beträgt beispielsweise 0,1 bis 200 µm, vorzugsweise 0,5 bis 70 µm. Sie kann z. B. mit Hilfe der optischen Mikroskopie, der Lichtstreuung oder der Gefrierbruchelektronenmikroskopie bestimmt werden.

Ausführungsformen der Erfindung sind insbesondere die Verwendung von Polyelektrolytkomplexen gebildet aus
* Homopolymeren der Acrylsäure und Vinylimidazoliumeinheiten enthaltenden Polymeren;
* Homopolymeren der Acrylsäure und Homopolymere mit Vinylimidazoliumeinheiten;
* Homopolymeren der Acrylsäure und Copolymere aus Monomeren mit Vinylimidazoliumeinheiten und Vinyllactamen, insbesondere Vinylpyrrolidon;
* Copolymeren der Acrylsäure mit 2-Acrylamido-2-methyl-propansulfonsäure und Vinylimidazoliumeinheiten enthaltenden Polymeren;
* Copolymeren der Acrylsäure mit 2-Acrylamido-2-methyl-propansulfonsäure und Homopolymere mit Vinylimidazoliumeinheiten;
* Copolymeren der Acrylsäure mit 2-Acrylamido-2-methyl-propansulfonsäure und Copolymere aus Monomeren mit Vinylimidazoliumeinheiten und Vinyllactamen, insbesondere Vinylpyrrolidon.

In einer Ausführungsform der Erfindung wird zur Bildung des Polyelektrolytkomplexes eine Kombination eines kationischen Polyurethans und eines anionischen Polyurethans verwendet. Ein anionisches Polyurethan enthält entweder anionische Gruppen und keine kationischen Gruppen oder sowohl anionische als auch kationische Gruppen, wobei die Anzahl der anionischen Gruppen überwiegt. Ein kationisches Polyurethan enthält entweder kationische Gruppen und keine anionischen Gruppen oder sowohl anionische als auch kationische Gruppen, wobei die Anzahl der kationischen Gruppen überwiegt. Die kationischen und anionischen Polyurethane werden vorzugsweise voneinander getrennt und in Form von wässrigen Dispersionen verwendet, wobei sich der Polyelektrolytkomplex beim Auftragen der mindestens zwei verschiedenen wässrigen Dispersionen auf das Substrat bildet.

Die kationischen Polyurethane sind vorzugsweise aufgebaut aus a) Polyisocyanaten, vorzugsweise mindestens einem Diisocyanat, b) Polyolen, vorzugsweise mindestens einem Polyesterdiol oder mindestens einem Polyetherdiol, und c) optional weiteren, ein- oder mehrwertigen Verbindungen mit reaktiven Gruppen, z.B. ausgewählt aus alkoholischen Hydroxygruppen, primären Aminogruppen, sekundären Aminogruppen und Isocyanatgruppen, wobei mindestens eine der Aufbaukomponenten eine oder mehrere kationische Gruppen aufweist.

Die anionischen Polyurethane sind vorzugsweise aufgebaut aus a) Polyisocyanaten, vorzugsweise mindestens einem Diisocyanat, b) Polyolen, vorzugsweise mindestens einem Polyesterdiol oder mindestens einem Polyetherdiol, und c) optional weiteren, ein- oder mehrwertigen Verbindungen mit reaktiven Gruppen, z.B. ausgewählt aus alkoholischen Hydroxygruppen, primären Aminogruppen, sekundären Aminogruppen und Isocyanatgruppen, wobei mindestens eine der Aufbaukomponenten eine oder mehrere anionische Gruppen aufweist.

Geeignete Diisocyanate sind beispielsweise solche der Formel X(NCO)2, wobei X für einen aliphatischen Kohlenwasserstoffrest mit 4 bis 15 C-Atomen, einen cycloaliphatischen oder aromatischen Kohlenwasserstoffrest mit 6 bis 15 C-Atomen oder einen araliphatischen Kohlenwasserstoffrest mit 7 bis 15 C-Atomen steht. Beispiele derartiger Diisocyanate sind Tetramethylendiisocyanat, Hexamethylendiisocyanat, Dodecamethylendiisocyanat, 1,4-Diisocyanatocyclohexan, 1-Isocyanato-3,5,5-trimethyl-5-isocyanatomethylcyclohexan (IPDI), 2,2-Bis-(4-isocyanatocyclohexyl)-propan, Trimethylhexandiisocyanat, 1,4-Diisocyanatobenzol, 2,4-Diisocyanatotoluol, 2,6-Diisocyanatotoluol, 4,4'-Diisocyanato-diphenylmethan, 2,4'-Diisocyanato-diphenylmethan, p-Xylylendiisocyanat, Tetramethylxylylendiisocyanat (TMXDI), die Isomeren des Bis-(4-isocyanatocyclohexyl)methans (HMDI) wie das trans/trans-, das cis/cis- und das cis/trans-Isomere sowie aus diesen Verbindungen bestehende Gemische. Derartige Diisocyanate sind im Handel erhältlich. Als Gemische dieser Isocyanate sind besonders die Mischungen der jeweiligen Strukturisomeren von Diisocyanatotoluol und Diisocyanato-diphenylmethan von Bedeutung, insbesondere ist die Mischung aus 80 mol-% 2,4-Diisocyanatotoluol und 20 mol-% 2,6-Diisocyanatotoluol geeignet. Weiterhin sind die Mischungen von aromatischen Isocyanaten wie 2,4-Diisocyanatotoluol und/oder 2,6-Diisocyanatotoluol mit aliphatischen oder cycloaliphatischen Isocyanaten wie Hexamethylendiisocyanat oder IPDI besonders vorteilhaft, wobei das bevorzugte Mischungsverhältnis der aliphatischen zu aromatischen Isocyanate 1:9 bis 9:1, insbesondere 1:4 bis 4:1 beträgt.

Zum Aufbau der Polyurethane kann man als Polyisocyanatverbindungen außer den vorgenannten auch Isocyanate einsetzen, die neben den freien Isocyanatgruppen weitere verkappte Isocyanatgruppen, z. B. Uretdiongruppen tragen.

Vorzugsweise sind die Polyurethane jeweils zu mindestens 40 Gew.-%, besonders bevorzugt zu mindestens 60 Gew.-% und ganz besonders bevorzugt zu mindestens 80 Gew.-% aus Diisocyanaten, Polyetherdiolen und/oder Polyesterdiolen aufgebaut. Bevorzugt enthalten die Polyurethane Polyesterdiole oder Polyetherdiole oder deren Gemisch in einer Menge von mehr als 10 Gew.-%, besonders bevorzugt größer 30 Gew. %, insbesondere größer 40 Gew. % oder größer 50 Gew. %, ganz besonders bevorzugt größer 60 Gew. %, bezogen auf das Polyurethan.

Als Polyesterdiole kommen vornehmlich höhermolekulare Diole in Betracht, die ein Molekulargewicht von über 500 und bis zu 5000, vorzugsweise von etwa 1000 bis 3000 g/mol haben. Polyetherdiole haben vorzugsweise ein Molgewicht von 240 bis 5000 g/mol. Es handelt sich hierbei um das zahlenmittlere Molgewicht Mn. Mn ergibt sich durch Bestimmung der Anzahl der Endgruppen (OH-Zahl).

Polyesterdiole sind z. B. aus Ullmanns Enzyklopädie der technischen Chemie, 4. Auflage, Band 19, S. 62 bis 65 bekannt. Bevorzugt werden Polyesterdiole eingesetzt, die durch Umsetzung von zweiwertigen Alkoholen mit zweiwertigen Carbonsäuren erhalten werden. Anstelle der freien Polycarbonsäuren können auch die entsprechenden Polycarbonsäureanhydride oder entsprechende Polycarbonsäureester von niederen Alkoholen oder deren Gemische zur Herstellung der Polyesterpolyole verwendet werden. Die Polycarbonsäuren können aliphatisch, cycloaliphatisch, araliphatisch, aromatisch oder heterocyclisch sein und gegebenenfalls, z. B. durch Halogenatome, substituiert und/oder ungesättigt sein. Als Beispiele hierfür seien genannt: Korksäure, Azelainsäure, Phthalsäure, Isophthalsäure, Phthalsäureanhydrid, Tetrahydrophthalsäureanhydrid, Hexahydrophthalsäureanhydrid, Tetrachlorphthalsäureanhydrid, Endomethylentetrahydrophthalsäureanhydrid, Glutarsäureanhydrid, Maleinsäure, Maleinsäureanhydrid, Fumarsäure, dimere Fettsäuren. Bevorzugt sind Dicarbonsäuren der allgemeinen Formel HOOC- (CH2)y-COOH, wobei y eine Zahl von 1 bis 20, bevorzugt eine gerade Zahl von 2 bis 20 ist, z.B. Bernsteinsäure, Adipinsäure, Sebacinsäure und Dodecandicarbonsäure.

Als zweiwertige Alkohole zur Herstellung der Polyesterdiole kommen z. B. Ethylenglykol, Propan-1,2- diol, Propan-1,3-diol, Butan-1,3-diol, Buten-1,4-diol, Butin-1,4-diol, Pentan-1,5-diol, Neopentylglykol, Bis-(hydroxymethyl)-cyclohexane wie 1,4-Bis-(hydroxymethyl)cyclohexan, 2-Methyl-propan-1,3-diol, Methylpentandiole, ferner Diethylenglykol, Triethylenglykol, Tetraethylenglykol, Polyethylenglykol, Dipropylenglykol, Polypropylenglykol, Dibutylenglykol und Polybutylenglykole in Betracht. Bevorzugt sind Alkohole der allgemeinen Formel HO-(CH2)x-OH, wobei x eine Zahl von 1 bis 20, bevorzugt eine gerade Zahl von 2 bis 20 ist. Beispiele hierfür sind Ethylenglycol, Butan-1,4-diol, Hexan-1,6-diol, Octan-1,8-diol und Dodecan-1,12-diol. Weiterhin bevorzugt ist Neopentylglykol.

Zusätzlich zu den Polyesterdiolen oder zu den Polyetherdiolen können gegebenenfalls auch Polycarbonat-Diole, wie sie z. B. durch Umsetzung von Phosgen mit einem Überschuss von den als Aufbaukomponenten für die Polyesterpolyole genannten niedermolekularen Alkohole erhalten werden können, mit verwendet werden. Gegebenenfalls können auch Polyesterdiole auf Lacton-Basis verwendet werden, wobei es sich um Homo- oder Mischpolymerisate von Lactonen, bevorzugt um endständige Hydroxylgruppen aufweisende Anlagerungsprodukte von Lactonen an geeignete difunktionelle Startermoleküle handelt. Als Lactone kommen bevorzugt solche in Betracht, die sich von Verbindungen der allgemeinen Formel HO-(CH₂)Z-COOH ableiten, wobei z eine Zahl von 1 bis 20 ist und ein H-Atom einer Methyleneinheit auch durch einen C₁- bis C₄-Alkylrest substituiert sein kann. Beispiele sind e-Caprolacton, β-Propiolacton, g-Butyrolacton und/oder Methyl-e-caprolacton sowie deren Gemische. Geeignete Starterkomponenten sind z. B. die vorstehend als Aufbaukomponente für die Polyesterpolyole genannten niedermolekularen zweiwertigen Alkohole. Die entsprechenden Polymerisate des e-Caprolactons sind besonders bevorzugt. Auch niedere Polyesterdiole oder Polyetherdiole können als Starter zur Herstellung der Lacton-Polymerisate eingesetzt sein. Anstelle der Polymerisate von Lactonen können auch die entsprechenden, chemisch äquivalenten Polykondensate der den Lactonen entsprechenden Hydroxycarbonsäuren, eingesetzt werden.

Polyetherdiole sind insbesondere durch Polymerisation von Ethylenoxid, Propylenoxid, Butylenoxid, Tetrahydrofuran, Styroloxid oder Epichlorhydrin mit sich selbst, z. B. in Gegenwart von BF3 oder durch Anlagerung dieser Verbindungen gegebenenfalls im Gemisch oder nacheinander, an Startkomponenten mit reaktionsfähigen Wasserstoffatomen, wie Alkohole oder Amine, z. B. Wasser, Ethylenglykol, Propan-1,2-diol, Propan-1,3-diol, 2,2-Bis(4-hydroxyphenyl)-propan oder Anilin erhältlich. Besonders bevorzugt sind Polypropylenoxid, Polytetrahydrofuran eines Molekulargewichts von 240 bis 5000, und vor allem 500 bis 4500. Bevorzugt sind Polyetherdiole, die zu weniger als 20 Gew.-% aus Ethylenoxid bestehen.

Gegebenenfalls können auch Polyhydroxyolefine mit verwendet werden, bevorzugt solche mit 2 endständigen Hydroxylgruppen, z. B. α,-ω-Dihydroxypolybutadien, α,-ω-Dihydroxypolymethacrylester oder α,-ω-Dihydroxypolyacrylester als Monomere (c1). Solche Verbindungen sind beispielsweise aus der EP-A 622 378 bekannt. Weitere geeignete Polyole sind Polyacetale, Polysiloxane und Alkydharze.

Vorzugsweise sind die Polyetherdiole ausgewählt aus Polytetrahydrofuran und Polypropylenoxid. Vorzugsweise sind die Polyesterdiole ausgewählt aus Umsetzungsprodukten zweiwertiger Alkohole mit zweiwertigen Carbonsäuren und Polyesterdiolen auf Lacton-Basis.

Die Härte und das Elastizitätsmodul der Polyurethane lassen sich, falls erforderlich, erhöhen, wenn als Diole neben den Polyesterdiolen bzw. neben den Polyetherdiolen noch davon verschiedene, niedermolekulare, monomere Diole mit einem Molekulargewicht von etwa 60 bis 500, vorzugsweise von 62 bis 200 g/mol, eingesetzt werden. Als niedermolekulare monomere Diole werden vor allem die Aufbaukomponenten der für die Herstellung von Polyesterpolyolen genannten kurzkettigen Alkandiole eingesetzt, wobei die unverzweigten Diole mit 2 bis 12 C-Atomen und einer geradzahligen Anzahl von C-Atomen sowie Pentan-1,5-diol und Neopentylglykol bevorzugt werden. Beispiele sind Ethylenglykol, Propan-1,2-diol, Propan-1,3-diol, Butan-1,3-diol, Buten-1,4-diol, Butin-1,4-diol, Pentan-1,5-diol, Neopentylglykol, Bis-(hydroxymethyl)-cyclohexane wie 1,4-Bis-(hydroxymethyl)cyclohexan, 2-Methyl-propan-1,3-diol, Methylpentandiole, ferner Diethylenglykol, Triethylenglykol, Tetraethylenglykol, Polyethylenglykol, Dipropylenglykol, Polypropylenglykol, Dibutylenglykol und Polybutylenglykole in Betracht. Bevorzugt sind Alkohole der allgemeinen Formel HO-(CH₂)x-OH, wobei x eine Zahl von 1 bis 20, bevorzugt eine gerade Zahl von 2 bis 20 ist. Beispiele hierfür sind Ethylenglycol, Butan-1,4-diol, Hexan-1,6-diol, Octan-1,8-diol und Dodecan-1,12-diol. Weiterhin bevorzugt ist Neopentylglykol. Bevorzugt beträgt der Anteil der Polyesterdiole bzw. der Polyetherdiole, bezogen auf die Gesamtmenge aller Diole, 10 bis 100 mol-% und der Anteil der niedermolekularen, monomeren Diole, bezogen auf die Gesamtmenge aller Diole, 0 bis 90 mol-%. Besonders bevorzugt beträgt das Verhältnis der polymeren Diole zu den monomeren Diolen 0,1 : 1 bis 5:1, besonders bevorzugt 0,2 : 1 bis 2 : 1.

Um eine Wasserdispergierbarkeit der Polyurethane zu erreichen, können die Polyurethane zusätzlich Monomere als Aufbaukomponente enthalten, die wenigstens eine Isocyanatgruppe oder wenigstens eine gegenüber Isocyanatgruppen reaktive Gruppe und darüber hinaus wenigstens eine hydrophile Gruppe oder eine Gruppe, die sich in eine hydrophile Gruppe überführen lässt, tragen. Im folgenden Text wird der Begriff "hydrophile Gruppen oder potentiell hydrophile Gruppen" mit "(potentiell) hydrophile Gruppen" abgekürzt. Die (potentiell) hydrophilen Gruppen reagieren mit Isocyanaten wesentlich langsamer als die funktionellen Gruppen der Monomere, die zum Aufbau der Polymerhauptkette dienen. Der Anteil der Komponenten mit (potentiell) hydrophilen Gruppen an der Gesamtmenge aller Aufbaukomponenten der Polyurethane wird im allgemeinen so bemessen, dass die Molmenge der (potentiell) hydrophilen Gruppen, bezogen auf die Gewichtsmenge aller Monomere, 30 bis 1000, bevorzugt 50 bis 500 und besonders bevorzugt 80 bis 300 mmol/kg beträgt. Bei den (potentiell) hydrophilen Gruppen kann es sich um nichtionische oder bevorzugt um (potentiell) ionische hydrophile Gruppen handeln. Als nichtionische hydrophile Gruppen kommen insbesondere Polyethylenglycolether aus vorzugsweise 5 bis 100, bevorzugt 10 bis 80 Ethylenoxid-Wiederholungseinheiten, in Betracht. Der Gehalt an Polyethylenoxid-Einheiten beträgt im Allgemeinen 0 bis 10, bevorzugt 0 bis 6 Gew.-%, bezogen auf die Gewichtsmenge aller Monomere. Bevorzugte Monomere mit nichtionischen hydrophilen Gruppen sind Polyethylenoxiddiole mit mindestens 20 Gew.-% Ethylenoxid, Polyethylenoxidmonoole sowie die Reaktionsprodukte aus einem Polyethylenglykol und einem Diisocyanat, die eine endständig veretherten Polyethylenglykolrest tragen. Derartige Diisocyanate sowie Verfahren zu deren Herstellung sind in den Patentschriften US-A 3,905,929 und US-A 3,920,598 angegeben.

Die anionischen Polyurethane enthalten Monomere mit anionischen Gruppen als Aufbaukomponenten. Anionische Gruppen sind vor allem die Sulfonat-, die Carboxylat- und die Phosphatgruppe in Form ihrer Alkalimetall- oder Ammoniumsalze. Die kationischen Polyurethane enthalten Monomere mit kationischen Gruppen als Aufbaukomponenten. Kationische Gruppen sind vor allem die Ammoniumgruppen, insbesondere protonierte tertiäre Aminogruppen oder quartäre Ammoniumgruppen. Als anionische bzw. kationische Gruppen im Sinne der Erfindung werden auch potentiell anionische bzw. potentiell kationische Gruppen verstanden, die sich durch einfache Neutralisations-, Hydrolyse- oder Quaternisierungsreaktionen in die oben genannten ionischen hydrophilen Gruppen überführen lassen, also z. B. Carbonsäuregruppen oder tertiäre Aminogruppen. (Potentiell) ionische Monomere sind z. B. in Ullmanns Enzyklopädie der technischen Chemie, 4. Auflage, Band 19, S.311-313 und beispielsweise in der DE-A 1 495 745 ausführlich beschrieben.

Als (potentiell) kationische Monomere sind vor allem Monomere mit tertiären Aminogruppen von besonderer praktischer Bedeutung, beispielsweise: Tris-(hydroxyalkyl)-amine, N,N-Bis(hydroxyalkyl)-alkylamine, N-Hydroxyalkyl-dialkylamine, Tris-(aminoalkyl)-amine, N,N-Bis(aminoalkyl)-alkylamine, N-Aminoalkyl-dialkylamine, wobei die Alkylreste und Alkandiyl-Einheiten dieser tertiären Amine unabhängig voneinander aus 1 bis 6 C-Atomen bestehen. Weiterhin kommen tertiäre Stickstoffatome aufweisende Polyether mit vorzugsweise zwei endständigen Hydroxylgruppen, wie sie z. B. durch Alkoxylierung von zwei an Aminstickstoff gebundene Wasserstoffatome aufweisende Amine, z. B. Methylamin, Anilin oder N,N'-Dimethylhydrazin, in an sich üblicher Weise zugänglich sind, in Betracht. Derartige Polyether weisen im Allgemeinen ein zwischen 500 und 6000 g/mol liegendes Molgewicht auf. Diese tertiären Amine werden entweder mit Säuren, bevorzugt starken Mineralsäuren wie Phosphorsäure, Schwefelsäure, Halogenwasserstoffsäuren oder starken organischen Säuren oder durch Umsetzung mit geeigneten Quaternisierungsmitteln wie C₁- bis C₆-Alkylhalogeniden oder Benzylhalogeniden, z. B. Bromiden oder Chloriden, in die Ammoniumsalze überführt.

Besonders bevorzugte Aufbaukomponenten für kationische Polyurethane sind N,N-Bis(aminoalkyl)-alkylamine, insbesondere N,N-Bis(aminopropyl)-methylamin sowie N,N-Bis(hydroxyalkyl)-alkylamine, insbesondere N,N-Bis(2-hydroxyethyl)-methylamin.

Als Monomere mit (potentiell) anionischen Gruppen kommen üblicherweise aliphatische, cycloaliphatische, araliphatische oder aromatische Carbonsäuren und Sulfonsäuren in Betracht, die mindestens eine alkoholische Hydroxylgruppe oder mindestens eine primäre oder sekundäre Aminogruppe tragen. Bevorzugt sind Dihydroxyalkylcarbonsäuren, vor allem mit 3 bis 10 C-Atomen, wie sie auch in der US-A 3,412,054 beschrieben sind. Insbesondere sind Verbindungen der allgemeinen Formel (c1) 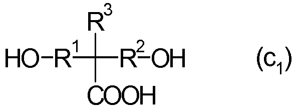 in welcher R¹ und R² für eine C₁- bis C₄-Alkandiyl-(Einheit) und R³ für eine C₁- bis C₄-Alkyl-(Einheit) steht und vor allem Dimethylolpropionsäure (DMPA) bevorzugt. Weiterhin eignen sich entsprechende Dihydroxysulfonsäuren und Dihydroxyphosphonsäuren wie 2,3-Dihydroxypropanphosphonsäure. Ansonsten geeignet sind Dihydroxylverbindungen mit einem Molekulargewicht über 500 bis 10000 g/mol mit mindestens 2 Carboxylatgruppen, die aus der DE-A 39 11 827 bekannt sind. Sie sind durch Umsetzung von Dihydroxylverbindungen mit Tetracarbonsäuredianhydriden wie Pyromellitsäuredianhydrid oder Cyclopentantetracarbonsäuredianhydrid im Molverhältnis 2 : 1 bis 1,05 : 1 in einer Polyadditionsreaktion erhältlich. Als Dihydroxylverbindungen sind insbesondere die oben als Kettenverlängerer aufgeführten Monomere sowie die oben genannten Diole geeignet.

Besonders bevorzugte anionische Aufbaukomponenten weisen Carboxylgruppen auf. Die Carboxylgruppen können in die Polyurethane eingeführt werden durch die vorstehend genannten aliphatischen, cycloaliphatischen, araliphatischen oder aromatischen Carbonsäuren, die mindestens eine alkoholische Hydroxylgruppe oder mindestens eine primäre oder sekundäre Aminogruppe tragen. Bevorzugt sind Dihydroxyalkylcarbonsäuren, vor allem mit 3 bis 10 C-Atomen, insbesondere Dimethylolpropionsäure.

Eine besonders bevorzugte Aufbaukomponente für anionische Polyurethane ist 2,2-Bis-(hydroxymethyl-)propionsäure (Dimethylolpropionsäure, DMPA).

Als weitere anionische Aufbaukomponenten mit gegenüber Isocyanaten reaktiven Aminogruppen kommen Aminocarbonsäuren wie Lysin, β-Alanin oder die in der DE-A 20 34 479 genannten Addukte von aliphatischen diprimären Diaminen an a,β-ungesättigte Carbon- oder Sulfonsäuren in Betracht. Solche Verbindungen gehorchen beispielsweise der Formel (c2)

H₂N-R4-NH-R5-X (c2)

in der R⁴ und R⁵ unabhängig voneinander für eine C₁- bis C₆-Alkandiyl-Einheit, bevorzugt Ethylen und X für COOH oder SO₃H stehen. Besonders bevorzugte Verbindungen der Formel (c2) sind die N-(2-Aminoethyl)-2-aminoethancarbonsäure sowie die N-(2-Aminoethyl)-2-aminoethansulfonsäure bzw. die entsprechenden Alkalisalze, wobei Na als Gegenion besonders bevorzugt ist. Weiterhin besonders bevorzugt sind die Addukte der oben genannten aliphatischen diprimären Diamine an 2-Acrylamido-2-methylpropansulfonsäure, wie sie z. B. in der DE-B 1 954 090 beschrieben sind.

Sofern Monomere mit potentiell ionischen Gruppen eingesetzt werden, kann deren Überführung in die ionische Form vor, während, jedoch vorzugsweise nach der Isocyanat-Polyaddition erfolgen, da sich die ionischen Monomeren in der Reaktionsmischung häufig nur schwer lösen. Neutralisierungsmittel sind z. B. Ammoniak, NaOH, Triethanolamin (TEA) Triisopropylamin (TIPA) oder Morpholin, bzw. dessen Derivate. Besonders bevorzugt liegen die Sulfonat- oder Carboxylatgruppen in Form ihrer Salze mit einem Alkaliion oder einem Ammoniumion als Gegenion vor.

Zur Vernetzung oder Kettenverlängerung der Polyurethane können weitere, mehrwertige Monomere dienen. Es sind im Allgemeinen mehr als zweiwertige nicht-phenolische Alkohole, Amine mit 2 oder mehr primären und/oder sekundären Aminogruppen sowie Verbindungen, die neben einer oder mehreren alkoholischen Hydroxylgruppen eine oder mehrere primäre und/oder sekundäre Aminogruppen tragen. Alkohole mit einer höheren Wertigkeit als 2, die zur Einstellung eines gewissen Verzweigungs- oder Vernetzungsgrades dienen können, sind z. B. Trimethylolpropan, Glycerin oder Zucker. Ferner kommen Polyamine mit 2 oder mehr primären und/oder sekundären Aminogruppen und Monoalkohole in Betracht, die neben der Hydroxylgruppe eine weitere gegenüber Isocyanaten reaktive Gruppe tragen wie Monoalkohole mit einer oder mehreren primären und/oder sekundären Aminogruppen, z. B. Monoethanolamin. Die Polyurethane enthalten bevorzugt 1 bis 30, besonders bevorzugt 4 bis 25 mol-%, bezogen auf die Gesamtmenge aller Aufbaukomponenten eines Polyamins mit mindestens 2 gegenüber Isocyanaten reaktiven Aminogruppen. Für den gleichen Zweck können auch höher als zweiwertige Isocyanate eingesetzt werden. Handelsübliche Verbindungen sind beispielsweise das Isocyanurat oder das Biuret des Hexamethylendiisocyanats.

Einwertige Monomere, die gegebenenfalls mit verwendet werden, sind Monoisocyanate, Monoalkohole und monoprimäre und -sekundäre Amine. Im Allgemeinen beträgt ihr Anteil maximal 10 mol-%, bezogen auf die gesamte Molmenge der Monomere. Diese monofunktionellen Verbindungen tragen üblicherweise weitere funktionelle Gruppen wie olefinische Gruppen oder Carbonylgruppen und dienen zur Einführung von funktionellen Gruppen in das Polyurethan, welche die Dispergierung bzw. die Vernetzung oder weitere polymeranaloge Umsetzung des Polyurethans ermöglichen. In Betracht kommen hierfür Monomere wie Isopropenyl-a,a-dimethylbenzylisocyanat (TMI) und Ester von Acryl- oder Methacrylsäure wie Hydroxyethylacrylat oder Hydroxyethylmethacrylat.

Auf dem Gebiet der Polyurethanchemie ist allgemein bekannt, wie das Molekulargewicht der Polyurethane durch Wahl der Anteile der miteinander reaktiven Monomere sowie des arithmetischen Mittels der Zahl der reaktiven funktionellen Gruppen pro Molekül eingestellt werden kann. Normalerweise werden die Komponenten sowie ihre jeweiligen Molmengen so gewählt, dass das Verhältnis A : B mit
A der Molmenge an Isocyanatgruppen und
B der Summe aus der Molmenge der Hydroxylgruppen und der Molmenge der funktionellen Gruppen, die mit Isocyanaten in einer Additionsreaktion reagieren können,
0,5 : 1 bis 2 : 1, bevorzugt 0,8 : 1 bis 1,5, besonders bevorzugt 0,9 : 1 bis 1,2 : 1 beträgt. Ganz besonders bevorzugt liegt das Verhältnis A : B möglichst nahe an 1 : 1. Die eingesetzten Monomere tragen im Mittel üblicherweise 1,5 bis 2,5, bevorzugt 1,9 bis 2,1, besonders bevorzugt 2,0 Isocyanatgruppen bzw. funktionelle Gruppen, die mit Isocyanaten in einer Additionsreaktion reagieren können.

Die Polyaddition der Aufbaukomponenten zur Herstellung des Polyurethans erfolgt vorzugsweise bei Reaktionstemperaturen von bis zu 180 °C, bevorzugt bis zu 150 °C unter Normaldruck oder unter autogenem Druck. Die Herstellung von Polyurethanen, bzw. von wässrigen Polyurethandispersionen ist dem Fachmann bekannt.

Die Polyurethane liegen vorzugsweise als wässrige Dispersion vor und werden in dieser Form verwendet.

Vorzugsweise ist das anionische Polyurethan aufgebaut aus
a) Diisocyanaten,
b) Polyesterdiolen mit einem Molgewicht von größer 500 bis 5000 g/mol und/oder Polyetherdiolen mit einem Molgewicht von 240 bis 5000 g/mol,
c) Carbonsäuregruppen aufweisenden Diolen, und
d) optional weiteren, von a)-c) verschiedenen, ein- oder mehrwertigen Verbindungen mit reaktiven Gruppen, ausgewählt aus alkoholischen Hydroxygruppen, primären Aminogruppen, sekundären Aminogruppen und Isocyanatgruppen.

Vorzugsweise ist das kationische Polyurethan aufgebaut aus
a) Diisocyanaten,
b) Polyesterdiolen mit einem Molgewicht von größer 500 bis 5000 g/mol und/oder Polyetherdiolen mit einem Molgewicht von 240 bis 5000 g/mol,
c) Verbindungen, welche mindestens eine tertiäre Amingruppe und 1, 2, oder 3 funktionelle Gruppen, ausgewählt aus Hydroxygruppen, primären Amingruppen und sekundären Amingruppen aufweisen und
d) optional weiteren, von a)-c) verschiedenen, ein- oder mehrwertigen Verbindungen mit reaktiven Gruppen, ausgewählt aus alkoholischen Hydroxygruppen, primären Aminogruppen, sekundären Aminogruppen und Isocyanatgruppen.

Zur Verwendung als Weichmacherbarriere werden die aus mindestens einem anionischen Polymer und aus mindestens einem kationischem Polymer bestehenden Polyelektrolytkomplexe auf die Oberfläche eines mindestens einen Weichmacher enthaltendes Substrats aufgetragen oder auf der Oberfläche gebildet.

Weichmacher sind bestimmte, flüssige oder feste, indifferente organische Substanzen mit geringem Dampfdruck, überwiegend solche esterartiger Natur, welche ohne chemische Reaktion, vorzugsweise durch ihr Löse- und Quellvermögen, mit hochpolymeren Stoffen in physikalische Wechselwirkung treten und ein homogenes System mit diesen bilden können. Weichmacher verleihen den mit ihnen hergestellten Gebilden bzw. Überzügen bestimmte angestrebte physikalische Eigenschaften, wie z.B. erniedrigte Einfriertemperatur, erhöhtes Formveränderungsvermögen, erhöhte elastische Eigenschaften oder verringerte Härte. Sie gehören zu den Kunststoffadditiven. Sie werden in ein Material eingebracht, um dessen Bearbeitbarkeit, Flexibilität und Dehnungsvermögen zu verbessern wie z.B. in Weich-PVC. Bevorzugte Weichmacher sind z.B. Phthalsäureester (z.B. Dioctylphthalat, Düsononylphthalat, Diisodecylphthalat; Dibutylphthalat, Diisobutylphthalat, Dicyclohexylphthalat; Dimethylphthalat, Diethylphthalat, Mischester aus Benzylbutyl-, Butyloctyl-, Butyldecyl- und Dipentylphthalat, Bis(2-methoxyethyl)-phthalat, Dicaprylphthalat und dergleichen); Trimellitsäureester mit (überwiegend) linearen C₆- bis C₁₁-Alkoholen (z.B. Tris(2-ethylhexyl)trimellitat); acyclische, aliphatische Dicarbonsäureester (z.B. Dioctyladipat, Diisodecyladipat, Dibutylsebacat, Dioctylsebacat, Decandisäurester oder Azelate); alicyclische Dicarbonsäureester (z.B. Diisononylcyclohexandicarbonsäureester), Phosphorsäureester (z.B. Trikresylphosphat, Triphenylphosphat, Diphenylkresylphosphat, Diphenyloctylphosphat, Tris(2-ethylhexyl)-phosphat, Tris(2-butoxyethyl)phosphat; Citronensäureester, Milchsäureester, Epoxyweichmacher, Benzolsulfonamide, Methylbenzolsulfonamide und ähnliche. Besonders bevorzugte Weichmacher sind Diisononylcyclohexan.dicarboxylat, Dibutylphthalat, Diisononylphthalat und Dinonylundecylphthalat.

Vorzugsweise handelt es sich bei den weichmacherhaltigen Substraten um Materialien aus Polyvinylchlorid (PVC, Weich-PVC), d.h. ein Substrat aus Weichmacher enthaltendem Weich-PVC wird mit einer mindestens einen Polyelektrolytkomplex enthaltenden Barriereschicht versehen. Hierbei wird die Oberfläche des Substrats zumindest teilweise mit mindestens einer Schicht, welche mindestens einen Polyelektrolytkomplex aufweist, beschichtet. In einer bevorzugten Ausführungsform handelt es ich bei dem Substrat um eine weichmacherhaltige PVC-Folie. Die PVC-Folie ist ein- oder beidseitig, vorzugsweise einseitig mit dem erfindungsgemäßen Polyelektrolytkomplex beschichtet.

In einer bevorzugten Ausführungsform der Erfindung ist ein Bestandteil des Polyelektrolytkomplexes ein anionisches Polymer, welches ausgewählt ist aus anionischen Polyurethanen und aus Polymeren, die herstellbar sind aus Monomeren, ausgewählt aus der Gruppe bestehend aus monoethylenisch ungesättigten C₃- bis C₁₀-Carbonsäuren, Vinylsulfonsäure, Styrolsulfonsäure, Acrylamidomethylpropansulfonsäure, Vinylphosphonsäure und Salzen dieser Säuren.

In einer bevorzugten Ausführungsform der Erfindung ist ein Bestandteil des Polyelektrolytkomplexes ein kationisches Polymer, welches ausgewählt ist aus der Gruppe bestehend aus kationischen Polyurethanen, Vinylimidazoliumeinheiten enthaltenden Polymeren, Polydiallyldimethylammoniumhalogeniden, Vinylamineinheiten enthaltenden Polymeren, Ethylenimineinheiten enthaltenden Polymeren, Dialkylaminoalkylacrylateinheiten enthaltenden Polymeren, Dialkylaminoalkylmethacrylateinheiten enthaltenden Polymeren, Dialkylaminoalkylacrylamideinheiten enthaltenden Polymeren und Dia-Ikylaminoalkylmethacrylamideinheiten enthaltenden Polymeren.

In einer bevorzugten Ausführungsform der Erfindung wird der Polyelektrolytkomplex gebildet aus einem anionischen Polyurethan und einem kationischen Polyurethan oder aus einem unter Verwendung von Acrylsäure oder Methacrylsäure radikalisch polymerisiertem Polymerisat und einem Aminogruppen oder quaternäre Ammoniumgruppen aufweisenden Polymer.

In einer Ausführungsform der Erfindung ist die den mindestens einen Polyelektrolytkomplex enthaltende Schicht zusätzlich ganz oder zumindest teilweise, unmittelbar oder mittelbar mit einer Klebstoffschicht beschichtet. Der Klebstoff ist vorzugsweise ausgewählt aus heißsiegelbaren Klebstoffen, kaltsiegelbaren Klebstoffen, Haftklebstoffen, Schmelzklebstoffen, strahlungsvernetzbaren Klebstoffen und wärmevernetzbaren Klebstoffen. Gegenstand der Erfindung ist z.B. eine heißsiegelbare Weich-PVC-Folie, welche eine äußere, heißsiegelbare Schicht aufweist und sich zwischen dem Trägermaterial aus Weich-PVC und der heißsiegelbaren Schicht eine mindestens einen Polyelektrolytkomplex enthaltende Barriereschicht befindet. Gegenstand der Erfindung ist Z.B. auch ein selbstklebendes Weich-PVC-Klebeband, wobei sich zwischen Trägermaterial aus Weich-PVC und äußerer Haftklebstoffschicht eine mindestens einen Polyelektrolytkomplex enthaltende Barriereschicht befindet.

Beim erfindungsgemäßen Verfahren werden weichmacherhaltige Substrate vorzugsweise mit einer wässrigen Lösung oder wässrigen Dispersion mindestens eines Polyelektrolytkomplexes beschichtet. Geeignete Substrate sind insbesondere weichmacherhaltige Kunststoffformteile oder weichmacherhaltige Polymerfolien, insbesondere PVC-Folien. Die zur Beschichtung eingesetzten Lösungen oder Dispersionen können weitere Zusatz- oder Hilfsstoffe enthalten, z.B. Verdicker zur Einstellung der Rheologie, Benetzungshilfsmittel oder Bindemittel.

Die Anwendung kann beispielsweise auf Beschichtungsmaschinen in der Weise vorgenommen werden, dass man auf eine Trägerfolie aus einem Kunststoff die Beschichtungszusammensetzung aufträgt. Sofern bahnförmige Materialien verwendet werden, wird die Polymerdispersion üblicherweise aus einer Wanne über eine Auftragswalze aufgetragen und mit Hilfe einer Luftbürste egalisiert. Andere Möglichkeiten, die Beschichtung aufzubringen, gelingt z.B. mit Hilfe des Reverse Gravure-Verfahrens, mit Sprühverfahren oder mit einem Rollrakel.

Außer diesen Beschichtungsverfahren sind die aus der Drucktechnik bekannten Tief- und Hochdruckverfahren ebenfalls geeignet für die Herstellung einer Barrierebeschichtung mittels Polyelektrolytkomplex. Statt unterschiedlicher Farben in den Farbdruckstationen werden hier bspw. die unterschiedlichen Polymere im Wechsel per Druckauftrag appliziert. Als Druckverfahren sind die dem Fachmann bekannten Flexodruckverfahren als Hochdruckverfahren, das Gravurverfahren als Beispiel des Tiefdrucks und der Offsetdruck als Beispiel des Flachdruckes zu erwähnen. Es kann auch moderner Digitaldruck, Druck per Inkjet, Elektrofotografie oder Direct Imaging verwendet werden.

In einer Ausführungsform wird der Polyelektrolytkomplex erst in situ auf dem Substrat gebildet, indem zwei Beschichtungszusammensetzungen gleichzeitig oder in einem Arbeitsschritt unmittelbar nacheinander, z.B. durch eine Kaskadenbeschichtung, aufgetragen werden, wobei eine der Beschichtungszusammensetzungen mindestens ein anionisches Polymer enthält und die andere Beschichtungszusammensetzung mindestens ein kationisches Polymer enthält. Bevorzugt ist dabei, dass zunächst mindestens eine erste Beschichtungszusammensetzung aufgetragen wird, welche mindestens ein kationisches Polymer mit primären, sekundären oder tertiären Amingruppen oder mindestens ein kationisches Polyurethan enthält und anschließend mindestens eine zweite Beschichtungszusammensetzung aufgetragen wird, welche mindestens ein anionisches Polymer mit Säuregruppen oder mindestens ein anionisches Polyurethan enthält. Die kationischen Polymere mit Aminogruppen sind z.B. Polymere mit Einheiten ausgewählt aus der Gruppe bestehend aus Vinylamin, Ethylenimin, Dialkylaminoalkylacrylat, Dialkylaminoalkylmethacrylat, Dialkylaminoalkylacrylamid, Dialkylaminoalkylmethacrylamid und deren Mischungen; insbesondere Polyvinylamine, Polyethylenimine, Polydimethylaminoethylacrylat, Polydimethylaminoethylmethacrylat, Copolymerisate aus Acrylamid und Dimethylaminoethylacrylat und Copolymerisate aus Acrylamid und Dimethylaminoethylmethacrylat. Die anionischen Polymere mit Säuregruppen sind z.B. Polymere mit Einheiten ausgewählt aus Acrylsäure, Methacrylsäure, Maleinsäure, 2-Acrylamido-2-methylpropansulfonsäure und deren Mischungen, insbesondere Homopolymere der Acrylsäure und Copolymere der Acrylsäure und der 2-Acrylamido-2-methylpropansulfonsäure.

Um die Haftung auf einer Folie noch zu verbessern, kann die Trägerfolie zuvor einer Corona-Behandlung unterworfen werden. Die auf die flächigen Materialien aufgetragenen Mengen betragen z.B. 1 bis 10 g (Polymer, fest) pro m², vorzugsweise 2 bis 7 g/m² bei Folien. Nach dem Aufbringen der Polyelektrolytkomplexe auf die flächigen Substrate wird das Lösungsmittel verdampft. Hierfür kann man beispielsweise bei kontinuierlichem Arbeiten das Material durch einen Trocknerkanal führen, der mit einer Infrarot-Bestrahlungsvorrichtung ausgestattet sein kann. Danach wird das beschichtete und getrocknete Material über eine Abkühlwalze geführt und schließlich aufgewickelt. Die Dicke der getrockneten Beschichtung beträgt vorzugsweise 1 bis 50 µm, besonders bevorzugt 2 bis 20 µm.

Die mit dem Polyelektrolytkomplex beschichteten Substrate zeigen eine hervorragende Barrierewirkung gegen die Migration von Weichmachern, insbesondere auch im Bereich von Knicken, Falten und Ecken. Die beschichteten Substrate können als solche z.B. als graphische Gestaltungselemente (graphic art), zur Kaschierung von Möbeln oder von Formteilen im Automobilbau wie z.B. Innentürverkleidungen, als Verpackungsmittel oder als Klebebänder verwendet werden. Die Beschichtungen haben sehr gute mechanische Eigenschaften, und zeigen z.B. gutes Blockverhalten und zeigen im Wesentlichen keine Rissbildungen.

Um spezielle Oberflächen- oder Beschichtungseigenschaften zu erhalten, beispielsweise eine gute Bedruckbarkeit, noch besseres Siegel- und Blockverhalten, gute Wasserbeständigkeit, kann es vorteilhaft sein, die mit Polyelektrolytkomplex beschichteten Substrate mit Deckschichten überzubeschichten, die diese gewünschten Eigenschaften zusätzlich verleihen. Die mit Polyelektrolytkomplexen vorbeschichteten Substrate zeigen eine gute Überbeschichtbarkeit. Es kann erneut nach einem oben angeführten Verfahren überbeschichtet oder in einem kontinuierlichen Prozess ohne zwischenzeitliches Auf- und Abwickeln z.B. der Folie mehrfach beschichtet werden. Die Weichmacherbarriereschicht befindet sich dadurch im Inneren des Systems, die Oberflächeneigenschaften werden dann von der Deckschicht bestimmt. Die Deckschicht hat eine gute Haftung zur Weichmacherbarriereschicht.

Die Dicke der Trägerfolien liegt im Allgemeinen in dem Bereich von 5 bis 100 µm, vorzugsweise von 5 bis 40 µm.

### Beispiele

Alle Prozentangaben sind Gewichtsangangaben, wenn nichts anderes angegeben ist. Die Angabe eines Gehalts bezieht sich auf den Gehalt in wässriger Lösung oder Dispersion. Die Bestimmung der Viskosität kann nach DIN EN ISO 3219 bei einer Temperatur von 23 °C mit einem Rotationsviskosimeter erfolgen.

**Einsatzstoffe:**

| | |
|---|---|
| Vinnapas® EP 17: | wässrige Polymerdispersion, hergestellt aus Vinylacetat und Ethylen (ca. 60% Feststoff) der Firma Wacker |
| Borchigel® L75N: | nichtionogenes Verdickungsmittel auf Basis eines hydrophob modifizierten Polyether-urethan-copolymers (50% in Wasser) |
| Lupraphen® VP 9186: | Polyesterdiol (Polyester mit endständigen OH-Gruppen aus Adipinsäure und 1,4-Butandiol) |
| Lupranol® 1000: | Polypropylenglykol mit einem gewichtsmittleren Molekulargewicht von 2000. |
| Lumiten® I-SC: | Benetzungshilfsmittel (Sulfobernsteinsäureester) |

### Beispiel 1 Kationische Polyurethandispersion

Es wurde eine Dispersion eines kationischen Polyurethans in Wasser hergestellt. Das Polyurethan ist gebildet aus 0,3 mol Lupraphen® VP9186 mit einer OH-Zahl von 45,8, 0,283 mol Toluylendiisocyanat, 0,283 mol Hexamethylendiisocyanat und 0,25 mol N-Methyldiethanolamin und Milchsäure zur pH-Werteinstellung.
Feststoffgehalt: 41,2%; K-Wert 45,4; Viskosität 22 mPa s; pH 4,6.

### Beispiel 2 Kationische Polyurethandispersion

Es wurde eine Dispersion eines kationischen Polyurethans in Wasser hergestellt. Das Polyurethan ist gebildet aus 0,3 mol Lupraphen® VP9186 mit einer OH-Zahl von 45,8, 0,263 mol Toluylendiisocyanat, 0,263 mol Isophorondiisocyanat und 0,21 mol N,N-Bis-(3-aminopropyl)methylamin und Salzsäure und Phosphorsäure zur pH-Werteinstellung.
Feststoffgehalt: 41,7%; K-Wert 44,8; Viskosität 29,7 mPa s; pH 5,6.

### Beispiel 3 Anionische Polyurethandispersion

Es wurde eine Dispersion eines anionischen Polyurethans in Wasser hergestellt. Das Polyurethan ist gebildet aus 0,4 mol Lupranol® 1000 mit einer OH-Zahl von 56,0, 1,0 mol Toluylendiisocyanat und 0,6 mol Dimethylolpropionsäure. Neutralisiert wurde mit wässriger Ammoniaklösung in einer zur Neutralisation von 90% der Säuregruppen der Dimethylolpropionsäure ausreichenden Menge.
Feststoffgehalt: 33,8%; K-Wert 37,8; Viskosität 1330 mPa s; pH 7,1.

### Beispiel 4 Anionische Polyurethandispersion

wie Beispiel 3, Neutralisation mit Ammoniak bis zu einer Neutralisation von 60% der Säuregruppen
Feststoffgehalt 39,8%, Viskosität 119 mPa s; pH 6,7

### Beispiel 5 Anionische Polyurethandispersion

wie Beispiel 3, Neutralisation mit KOH bis zu einer Neutralisation von 30% der Säuregruppen
Feststoffgehalt 44,3%, Viskosität 18,5 mPa s; pH 6,6

### Beispiel 6 Anionische Polyurethandispersion

wie Beispiel 5, Neutralisation mit KOH bis zu einer Neutralisation von 60% der Säuregruppen
Feststoffgehalt 37,6%, Viskosität 178 mPa s; pH 6,7

### Beispiel 7 Anionische Polyurethandispersion

wie Beispiel 5, Neutralisation mit KOH bis zu einer Neutralisation von 90% der Säuregruppen
Feststoffgehalt 31,9%, Viskosität 861 mPa s; pH 7,1

### Beispiel 8 Anionische Polyurethandispersion

wie Beispiel 3, Neutralisation mit Ammoniak bis zu einer Neutralisation von 30% der Säuregruppen
Feststoffgehalt 41,6%, Viskosität 8,9 mPa s; pH 6,4

### Beispiel 9 Kationische Polyurethandispersion

Es wurde eine Dispersion eines kationischen Polyurethans in Wasser hergestellt. Das Polyurethan ist gebildet aus 0,3 mol Lupraphen® VP9186 mit einer OH-Zahl von 44,8, 0,325 mol Toluylendiisocyanat, 0,325 mol Hexamethylendiisocyanat und 0,35 mol N,N-Bis-(3-aminopropyl)methylamin und Milchsäure zur pH-Werteinstellung. Feststoffgehalt: 34,9%; Viskosität 809 mPa s; pH 6,7.

### Klebstoffzusammensetzung 1

Es wurde eine Klebstoffzusammensetzung hergestellt aus 100 Gew.-Teilen einer Klebstoffdispersion, 50 Gew.-Teilen Vinnapas® EP 17, 0,1 Gew.-Teilen Lumiten® I-SC, und 1 Gew.-Teil Borchigel® L75N. Die Klebstoffdispersion ist eine Dispersion eines Polyurethans in Wasser. Das Polyurethan ist aufgebaut aus Polyesterdiol (Polyester mit endständigen OH-Gruppen aus Adipinsäure und 1,4-Butandiol), Isophorondiisocyanat (IPDI), Hexamethylendiisocyanat (HDI), Dimethylolpropionsäure (DMPA), Aminoethylaminoethansulfonsäure und Aminoethylaminoethanol.

### Prüfung auf Weichmachermigration:

Zur Prüfung auf Weichmachermigration wurden Folien aus Weich-PVC (von Benecke Kaliko) mit Gehalt von Weichmachern (Diisooctylphthalat und Diisobutylphthalat) in einer Menge von 40-50% mit Klebstoffzusammensetzung 1 (Menge, Schichtdicke?) beschichtet. Die Schichtdicke betrug 50 µm (fest). Bei weiteren Folien wurde zuerst eine Schicht aus anionischem Polymer oder aus kationischem Polymer (jede Schicht 16 µm (fest)) oder eine erfindungsgemäße Doppelschicht aus anionischem und kationischem Polymer (jede Schicht 16 µm (fest)) auf die Folie aufgebracht, bevor nach Antrocknen die Klebstoffzusammensetzung 1 aufgetragen wurde. Die mit Klebstoff beschichteten PVC-Folien wurden 24 Stunden bei Raumtemperatur bzw. 10 Tage bei 40°C gelagert. Nach Abschluss der Lagerzeit wurden alle Folien in einer Presse bei 65°C und 1,4 N/mm² Druck auf ein ABS-Formteil verpresst- Das fertige Formteil wird nach Abkühlen einem Schälversuch unterzogen. Hierzu werden am Formteil bei einer Umgebungstemperatur von 100°C im Winkel von 90°C Folienstreifen einer Breite von 5 cm abgezogen und die Kraft beim Ablösen der Folienstreifen vom Formteil bestimmt. Eine deutliche Verringerung der Schälkräfte beim Ablösen einer 10 Tage bei 40°C gelagerten Folie gegenüber einer 24 Stunden bei Raumtemperatur gelagerten Folie zeigt eine Migration von Weichmachern in die Klebstoffschicht und eine dadurch verminderte Haftung an.

Die Ergebnisse sind in Tabelle 1 zusammengefasst.

**Tabelle 1: Schälfestigkeit in N/25mm**

| Beispiel | kationische Barriere | anionische Barriere | nach Lagerung 24h bei RT | nach Lagerung 10 Tage bei 40°C |
|---|---|---|---|---|
| V1 | - | - | 14 | 6,5 |
| V2 | Beispiel 1 | - | 14,9 | 11,1 |
| V3 | Beispiel 2 | - | 16,7 | 12,6 |
| V4 | - | Beispiel 3 | 19,3 | 13,8 |
| V5 | Beispiel 2 | Beispiel 3 | 11,5 | 16,5 |
| V6 | Beispiel 1 | Beispiel 3 | 11,4 | 19,6 |

Angestrebt war ein Mindestwert für die Schälfestigkeit von mindestens 15 N/25mm nach Lagerung bei erhöhter Temperatur, was nur von den erfindungsgemäßen Beispielen V5 und V6 erreicht wird. Bei den nicht erfindungsgemäßen Beispielen V1 bis V4 ist nach Lagerung bei erhöhter Temperatur ein deutlicher Verlust an Klebefestigkeit unter Adhäsionsbruch zu erkennen. Es wird vermutet, dass die zunächst geringere Klebefestigkeit der erfindungsgemäßen Beispiele V5 und V6 auf einen Kohäsionsbruch innerhalb der Polyelektrolyt-Doppelschicht zurückgeführt werden, dass die Polyelektrolytkomplex-Doppelschicht aber mit der Zeit aushärtet und dann zu Klebefestigkeiten führt, die mit den nicht erfindungsgemäßen Beispielen nicht erreicht werden können.

Weitere Beispiele möglicher Ausführungsformen sind Weich-PVC Folien, beschichtet mit einer Kombination von kationischen und anionischen Polyurethanen gemäß Tabelle 2.

**Tabelle 2: Polyelektrolytkomplex-Weichmacherbarrieren**

| Beispiel | kationische Barriere | anionische Barriere |
|---|---|---|
| B1 | Beispiel 1 | Beispiel 4 |
| B2 | Beispiel 1 | Beispiel 5 |
| B3 | Beispiel 1 | Beispiel 6 |
| B4 | Beispiel 1 | Beispiel 7 |
| B5 | Beispiel 1 | Beispiel 8 |
| B6 | Beispiel 2 | Beispiel 4 |
| B7 | Beispiel 2 | Beispiel 5 |
| B8 | Beispiel 2 | Beispiel 6 |
| B9 | Beispiel 2 | Beispiel 7 |
| B10 | Beispiel 2 | Beispiel 8 |
| B11 | Beispiel 9 | Beispiel 3 |
| B12 | Beispiel 9 | Beispiel 4 |
| B13 | Beispiel 9 | Beispiel 5 |
| B14 | Beispiel 9 | Beispiel 6 |
| B15 | Beispiel 9 | Beispiel 7 |
| B16 | Beispiel 9 | Beispiel 8 |

### Beispiele 17-19: Durch Wasser-in-Wasser Emulsionspolymerisation hergestellte wässrige Polyelektrolytkomplexdispersionen

Eine für die Herstellung einer 20 gew.%igen Dispersion ausreichende Menge Wasser wird vorgelegt, auf 65°C Reaktionstemperatur erwärmt und 0,1 mol% (bezogen auf die Gesamtmenge der zu polymerisierenden Monomere) des Initiators 2,2'-Azobis(2-amidinopropan)dihydrochlorid wird zugefügt. Anschließend werden die in der nachfolgenden Tabelle angegebenen Mengen von Acrylsäure (AS), Ammoniumhydroxidlösung, 2-Acrylamido-2-methyl-propansulfonsäure (AMPS) und gegebenenfalls Vernetzer kontinuierlich zugegeben. Parallel wird das kationische Polymer Luviquat® FC 550 (Vinylpyrrolidon/Vinylimidazolium Methochlorid Copolymer) in den in der nachfolgenden Tabelle angegebenen Mengen zugeführt. Als Vernetzer werden Ethylengykoldiacrylat (Beispiel B18) und Trimethylolpropantriacrylat (Beispiel B19) eingesetzt.

Der Feststoffgehalt der Dispersionen betrug 17 Gew.%. Die Polyelektrolytkomplexdispersionen blieben über mehr als 2 Monate stabil dispergiert.

**Tabelle 3: Beispiele 17-19, Mengenangaben in mol**

| | AS | AMPS | NH4OH | Vernetzer | QVI¹⁾ |
|---|---|---|---|---|---|
| B17 | 0,99 | 0,01 | 0,025 | 0 | 0,052 |
| B18 | 0,99 | 0,01 | 0,025 | 0,0022 | 0,052 |
| B19 | 0,99 | 0,01 | 0,025 | 0,0015 | 0,052 |

| | | | | | |
|---|---|---|---|---|---|
| ¹⁾ Menge an quaterniertem Vinylimidazol (Bestandteil des kationischen Polymers) | | | | | |

### Screening-Test für Weichmacherbarriereeigenschaften

Mit den durch Wasser-in-Wasser Emulsionspolymerisation hergestellten wässrigen Polyelektrolytkomplexdispersionen B17 bis B19 wurde ein Screening-Test auf Papier durchgeführt, um ihre Eignung als Weichmacherbarriere zu evaluieren und um das Ausmaß von Weichmachermigration zu Visualisieren. Hierfür wurde handelsübliches Druckpapier (IMPEGA mit einem Flächengewicht von 80g) einseitig mit der zu testenden Polyelektrolytkomplexdispersion beschichtet und 1 Tag bei Raumtemperatur getrocknet. Die Schichtdicke betrug nach Trocknen 14 µm. Die Filme sind flexibel, gummi-artig elastisch, stabil, nicht brüchig und nicht klebrig. Mit den beschichteten Proben wird ein Penetrationstest durchgeführt. Die reine Weichmachersubstanz Phthalsäuredi-n-butylester (Palatinol® C) wird auf die beschichtete Papierseite (Vorderseite) aufgetragen. Dieser Weichmacher wurde gewählt, da er sich in Vortests als hinsichtlich Penetration als am aggressivsten im Vergleich zu anderen handelsüblichen Weichmachern herausgestellt hatte. Ein Durchtritt an Weichmacher zeigt sich durch optisch erkennbare Verfärbungen der unbeschichteten Papierrückseite in Form von dunklen Flecken. Nach den in der nachfolgenden Tabelle angegebenen Zeiträumen wird der prozentuale Anteil an verfärbten Stellen auf der unbeschichteten Papierrückseite bestimmt. Die angegebenen Werte entsprechen dem ungefähren Prozentsatz verfärbter Oberfläche.

Als Vergleich V7 wurde eine Beschichtung mit einer mit ZnO vernetzten Polyacrylsäure (Besela®, 1 mol ZnO auf 2 mol Acrylsäure) durchgeführt, Beschichtungsmenge 10 g (fest)/m².

**Tabelle 4 Screening-Test für Weichmacherpenetration**

| Beispiel | 5 min | 1 h | 2 h | 18 h | 2 d |
|---|---|---|---|---|---|
| B17 | 0% | 0% | 0% | 0% | 3% |
| B18 | 0% | 0% | 0% | 0% | 0% |
| B19 | 1% | 1% | 1% | 3% | 3% |
| V7 | 90% | 100% | 100% | 100% | 100% |

Die Beispiele zeigen hervorragende Weichmacherbarriereeigenschaften da im Falle von unbeschichteten Papieren oder von mit Filmen mit ungenügenden Weichmacherbarriereeigenschaften beschichtete Papiere bereits nach 1 Stunde oder früher eine Penetration von 100% zeigen, für erfindungsgemäße Beschichtungen die Penetration aber noch nach 2 Tagen deutlich unter 5% beträgt.

## Patentansprüche

1. Verwendung von Polyelektrolytkomplexen als Weichmacherbarriere zur zumindest teilweisen Beschichtung mit mindestens einer Schicht auf der Oberfläche eines weichmacherhaltigen Substrates, **dadurch gekennzeichnet, dass** die Polyelektrolytkomplexe gebildet sind aus mindestens einem anionischen Polymer und mindestens einem kationischen Polymer.

2. Verwendung nach dem vorhergehenden Anspruch, **dadurch gekennzeichnet, dass** ein Bestandteil des Polyelektrolytkomplexes ein anionisches Polymer ist, ausgewählt aus anionischen Polyurethanen und aus Polymeren, die herstellbar sind aus Monomeren, ausgewählt aus der Gruppe bestehend aus monoethylenisch ungesättigten C₃- bis C₁₀-Carbonsäuren, Vinylsulfonsäure, Styrolsulfonsäure, Acrylamidomethylpropansulfonsäure, Vinylphosphonsäure und Salzen dieser Säuren.

3. Verwendung nach einem der vorhergehenden Ansprüche, **dadurch gekennzeichnet, dass** ein Bestandteil des Polyelektrolytkomplexes ein kationisches Polymer ist, ausgewählt aus der Gruppe bestehend aus kationischen Polyurethanen, Vinylimidazoliumeinheiten enthaltenden Polymeren, Polydiallyldimethylammoniumhalogeniden, Vinylamineinheiten enthaltenden Polymeren, Ethylenimineinheiten enthaltenden Polymeren, Dialkylaminoalkylacrylateinheiten enthaltenden Polymeren, Dialkylaminoalkylmethacrylateinheiten enthaltenden Polymeren, Dialkylaminoalkylacrylamideinheiten enthaltenden Polymeren und Dialkylaminoalkylmethacrylamideinheiten enthaltenden Polymeren.

4. Verwendung nach einem der vorhergehenden Ansprüche, **dadurch gekennzeichnet, dass** der Polyelektrolytkomplex gebildet wird aus einem anionischen Polyurethan und einem kationischen Polyurethan oder aus einem unter Verwendung von Acrylsäure oder Methacrylsäure radikalisch polymerisiertem Polymerisat und einem Aminogruppen oder quaternäre Ammoniumgruppen aufweisenden Polymer.

5. Verwendung nach einem der vorhergehenden Ansprüche, **dadurch gekennzeichnet, dass** der Weichmacher ausgewählt ist aus Phthalsäurestern, Trimellitsäureestern mit überwiegend linearen C₆- bis C₁₁-Alkoholen, acyclischen, aliphatischen Dicarbonsäureestern, alicyclischen Dicarbonsäureestern, Phosphorsäureestern, Citronensäureestern, Milchsäureestern, Epoxyweichmachern, Benzolsulfonamiden, Methylbenzolsulfonamiden und deren Mischungen.

6. Verwendung nach einem der vorhergehenden Ansprüche, **dadurch gekennzeichnet, dass** ein Substrat aus Weichmacher enthaltendem Weich-PVC mit einer mindestens einen Polyelektrolytkomplex enthaltenden Barriereschicht versehen ist.

7. Weichmacherhaltiges Substrat, dessen Oberfläche zumindest teilweise mit mindestens einer Schicht, welche mindestens einen Polyelektrolytkomplex aufweist, beschichtet ist, **dadurch gekennzeichnet, dass** der Polyelektrolytkomplex gebildet ist aus mindestens einem anionischen Polymer und mindestens einem kationischen Polymer.

8. Substrat nach dem vorhergehenden Anspruch, **dadurch gekennzeichnet, dass** es sich um eine beschichtete, weichmacherhaltige PVC-Folie handelt.

9. Substrat nach einem der beiden vorhergehenden Ansprüche, **dadurch gekennzeichnet, dass** die den mindestens einen Polyelektrolytkomplex enthaltende Schicht zusätzlich unmittelbar oder mittelbar mit einer Klebstoffschicht beschichtet ist.

10. Substrat nach dem vorhergehenden Anspruch, **dadurch gekennzeichnet, dass** der Klebstoff ausgewählt ist aus heißsiegelbaren Klebstoffen, kaltsiegelbaren Klebstoffen, Haftklebstoffen, Schmelzklebstoffen, strahlungsvernetzbaren Klebstoffen und wärmevernetzbaren Klebstoffen.

11. Substrat nach dem vorhergehenden Anspruch, **dadurch gekennzeichnet, dass** es als heißsiegelbare Weich-PVC-Folie oder als selbstklebendes Weich-PVC-Klebeband vorliegt.

12. Verfahren zur Herstellung von weichmacherhaltigen Produkten mit Weichmacherbarriere, wobei
(i) ein Substrat aus Weichmacher enthaltenden Material bereitgestellt wird, und
(ii) das Substrat ganz oder teilweise mit einer oder mehreren Schichten versehen wird, welche mindestens einen Polyelektrolytkomplex aufweisen, wobei der Polyelektrolytkomplex gebildet ist aus mindestens einem anionischen Polymer und mindestens einem kationischen Polymer.

13. Verfahren nach dem vorhergehenden Anspruch, **dadurch gekennzeichnet, dass** entweder die Beschichtung mit dem Polyelektrolytkomplex mit einer mindestens einen, zuvor hergestellten Polyelektrolytkomplex enthaltenden Zusammensetzung erfolgt, oder dass die Beschichtung mit dem Polyelektrolytkomplex dadurch erfolgt, dass der Polyelektrolytkomplex erst auf dem Substrat gebildet wird.

14. Verfahren nach dem vorhergehenden Anspruch, **dadurch gekennzeichnet, dass** die den zuvor hergestellten Polyelektrolytkomplex enthaltende Zusammensetzung eine durch Wasser-in-Wasser Emulsionspolymerisation herstellbare wässrige Dispersion ist mit einem Gehalt an 1 bis 40 Gew.% Polyelektrolytkomplex.

15. Verfahren nach Anspruch 13, **dadurch gekennzeichnet, dass** das Substrat mit einer ersten Beschichtung und mit einer mit der ersten Beschichtung in unmittelbarem Kontakt kommenden zweiten Beschichtung versehen wird, wobei eine der Beschichtungen mindestens ein anionisches Polymer enthält und die andere Beschichtung mindestens ein kationisches Polymer enthält und der Polyelektrolytkomplex aus anionischem Polymer und kationischem Polymer erst auf dem Substrat gebildet wird.

16. Verfahren nach dem vorhergehenden Anspruch, **dadurch gekennzeichnet, dass** zwei Beschichtungszusammensetzungen gleichzeitig oder in einem Arbeitsschritt unmittelbar nacheinander aufgetragen werden, wobei eine der Beschichtungszusammensetzungen das anionische Polymer enthält und die andere Beschichtungszusammensetzung das kationische Polymer enthält.

## Claims

1. The use of polyelectrolyte complexes as plasticizer barrier for coating the surface of a plasticized substrate at least to some extent with at least one layer, wherein the polyelectrolyte complexes have been formed from at least one anionic polymer and from at least one cationic polymer.

2. The use according to the preceding claim, wherein a constituent of the polyelectrolyte complex is an anionic polymer selected from anionic polyurethanes and from polymers capable of production from monomers selected from the group consisting of monoethylenically unsaturated C₃-C₁₀ carboxylic acids, vinylsulfonic acid, styrenesulfonic acid, acrylamidomethylpropanesulfonic acid, vinylphosphonic acid, and salts of these acids.

3. The use according to either of the preceding claims, wherein a constituent of the polyelectrolyte complex is a cationic polymer selected from the group consisting of cationic polyurethanes, polymers comprising vinylimidazolium units, polydiallyldimethylammonium halides, polymers comprising vinylamine units, polymers comprising ethyleneimine units, polymers comprising dialkylaminoalkyl acrylate units, polymers comprising dialkylaminoalkyl methacrylate units, polymers comprising dialkylaminoalkylacrylamide units, and polymers comprising dialkylaminoalkylmethacrylamide units.

4. The use according to any of the preceding claims, wherein the polyelectrolyte complex is formed from an anionic polyurethane and from a cationic polyurethane, or from a polymer polymerized by a free-radical route using acrylic acid or using methacrylic acid, and from a polymer having amino groups or having quaternary ammonium groups.

5. The use according to any of the preceding claims, wherein the plasticizer has been selected from phthalic esters, trimellitic esters with predominantly linear C₆-C₁₁ alcohols, acyclic, aliphatic dicarboxylic esters, alicyclic dicarboxylic esters, phosphoric esters, citric esters, lactic esters, epoxy plasticizers, benzenesulfonamides, methylbenzenesulfonamides, and mixtures of these.

6. The use according to any of the preceding claims, wherein a substrate made of flexible PVC comprising plasticizer has been provided with a barrier layer comprising at least one polyelectrolyte complex.

7. A plasticized substrate, the surface of which has been at least to some extent coated with at least one layer which comprises at least one polyelectrolyte complex, wherein the polyelectrolyte complex has been formed from at least one anionic polymer and from at least one cationic polymer.

8. The substrate according to the preceding claim, which is a coated, plasticized PVC foil.

9. The substrate according to either of the preceding claims, wherein the layer comprising the at least one polyelectrolyte complex has been coated directly or indirectly with an adhesive layer.

10. The substrate according to the preceding claim, wherein the adhesive has been selected from heat-sealable adhesives, cold-sealable adhesives, pressure-sensitive adhesives, hot-melt adhesives, radiation-crosslinkable adhesives, and thermally crosslinkable adhesives.

11. The substrate according to the preceding claim, which takes the form of a heat-sealable flexible-PVC foil or self-adhesive flexible-PVC tape.

12. A process for producing plasticized products with plasticizer barrier, where
(i) a substrate made of material comprising plasticizer is provided, and
(ii) the substrate is entirely or to some extent provided with one or more layers which comprise at least one polyelectrolyte complex, the polyelectrolyte complex having been formed from at least one anionic polymer and from at least one cationic polymer.

13. The process according to the preceding claim, wherein either the method of coating with the polyelectrolyte complex uses a composition comprising at least one previously produced polyelectrolyte complex or the method of coating with the polyelectrolyte complex delays formation of the polyelectrolyte complex until the material is on the substrate.

14. The process according to the preceding claim, wherein the composition comprising the previously produced polyelectrolyte complex is an aqueous dispersion which has from 1 to 40% by weight content of polyelectrolyte complex and which is capable of production by water-in-water emulsion polymerization.

15. The process according to claim 13, wherein the substrate is provided with a first coating and with a second coating that is in direct contact with the first coating, where one of the coatings comprises at least one anionic polymer and the other coating comprises at least one cationic polymer, and formation of the polyelectrolyte complex made of anionic polymer and of cationic polymer is delayed until the material is on the substrate.

16. The process according to the preceding claim, wherein two coating compositions are applied simultaneously or in direct succession in one operation, where one of the coating compositions comprises the anionic polymer and the other coating composition comprises the cationic polymer.

## Revendications

1. Utilisation de complexes polyélectrolytiques comme barrière aux plastifiants pour le revêtement au moins partiel par au moins une couche sur la surface d'un substrat contenant du plastifiant, **caractérisée en ce que** les complexes polyélectrolytiques sont formés à partir d'au moins un polymère anionique et d'au moins un polymère cationique.

2. Utilisation la revendication précédente, **caractérisée en ce qu'**un constituant du complexe polyélectrolytique est un polymère anionique choisi parmi les polyuréthanes anioniques et parmi les polymères qui peuvent être préparés à partir de monomères choisis dans le groupe constitué par les acides carboxyliques éthyléniquement mono-insaturés en C₃-C₁₀, l'acide vinylsulfonique, l'acide styrènesulfonique, l'acide acrylamidométhylpropanesulfonique, l'acide vinylphosphonique et les sels de ces acides.

3. Utilisation selon l'une quelconque des revendications précédentes, **caractérisée en ce qu'**un constituant du complexe polyélectrolytique est un polymère cationique choisi dans le groupe constitué par les polyuréthanes cationiques, les polymères contenant des unités vinylimidazolium, les poly(halogénures de diallyldiméthylammonium), les polymères contenant des unités vinylamine, les polymères contenant des unités éthylène-imine, les polymères contenant des unités acrylate de dialkylaminoalkyle, les polymères contenant des unités méthacrylate de dialkylaminoalkyle, les polymères contenant des unités dialkylaminoalkylacrylamide et les polymères contenant des unités dialkylaminoalkylméthacrylamide.

4. Utilisation selon l'une quelconque des revendications précédentes, **caractérisée en ce que** le complexe polyélectrolytique est formé à partir d'un polyuréthane anionique et d'un polyuréthane cationique ou à partir d'un polymère polymérisé par voie radicalaire avec utilisation d'acide acrylique ou d'acide méthacrylique et d'un polymère présentant des groupes amino ou des groupes d'ammonium quaternaire.

5. Utilisation selon l'une quelconque des revendications précédentes, **caractérisée en ce que** le plastifiant est choisi parmi les esters de l'acide phtalique, les esters de l'acide trimellitique avec des alcools en C₆-C₁₁ principalement linéaires, les esters d'acides dicarboxyliques acycliques, aliphatiques, les esters d'acides dicarboxyliques alicycliques, les esters de l'acide phosphorique, les esters de l'acide citrique, les esters de l'acide lactique, les plastifiants de type époxy, les benzènesulfonamides, les méthylbenzènesulfonamides et leurs mélanges.

6. Utilisation selon l'une quelconque des revendications précédentes, **caractérisée en ce qu'**un substrat en PVC souple contenant du plastifiant est pourvu d'une couche formant une barrière contenant au moins un complexe polyélectrolytique.

7. Substrat contenant du plastifiant, dont la surface est revêtue au moins partiellement par au moins une couche qui comprend au moins un complexe polyélectrolytique, **caractérisé en ce que** le complexe polyélectrolytique est formé à partir d'au moins un polymère anionique et d'au moins un polymère cationique.

8. Substrat selon la revendication précédente, **caractérisé en ce qu'**il s'agit d'une feuille en PVC revêtue, contenant du plastifiant.

9. Substrat selon l'une quelconque des deux revendications précédentes, **caractérisé en ce que** la couche contenant ledit au moins un complexe polyélectrolytique est en plus revêtue directement ou indirectement par une couche d'adhésif.

10. Substrat selon la revendication précédente, **caractérisé en ce que** l'adhésif est choisi parmi les adhésifs thermosoudables, les adhésifs soudables à froid, les autoadhésifs, les adhésifs fusibles, les adhésifs réticulables par un rayonnement et les adhésifs thermoréticulables.

11. Substrat selon la revendication précédente, **caractérisé en ce qu'**il se trouve sous forme d'une feuille souple en PVC thermosoudable ou sous forme d'un ruban autoadhésif souple en PVC.

12. Procédé pour la fabrication de produits contenant du plastifiant présentant une barrière aux plastifiants,
(i) un substrat en matériau contenant du plastifiant étant mis à disposition et
(ii) le substrat étant pourvu totalement ou partiellement d'une ou de plusieurs couches, qui contien(nen)t au moins un complexe polyélectrolytique, le complexe polyélectrolytique étant formé à partir d'au moins un polymère anionique et d'au moins un polymère cationique.

13. Procédé selon la revendication précédente, **caractérisé en ce que** le revêtement par le complexe polyélectrolytique est réalisé à l'aide d'une composition contenant au moins un complexe polyélectrolytique préparé au préalable ou alors **en ce que** le revêtement par le complexe polyélectrolytique est réalisé **en ce que** le complexe polyélectrolytique n'est formé qu'une fois sur le substrat.

14. Procédé selon la revendication précédente, **caractérisé en ce que** la composition contenant le complexe polyélectrolytique préparé au préalable est une dispersion aqueuse pouvant être préparée par une polymérisation en émulsion eau-dans-eau présentant une teneur en complexe polyélectrolytique de 1 à 40% en poids.

15. Procédé selon la revendication 13, **caractérisé en ce que** le substrat est pourvu d'un premier revêtement et d'un deuxième revêtement entrant directement en contact avec le premier revêtement, un des revêtements contenant au moins un polymère anionique et l'autre revêtement contenant au moins un polymère cationique et le complexe polyélectrolytique constitué par un polymère anionique et par un polymère cationique n'étant formé qu'une fois sur le substrat.

16. Procédé selon la revendication précédente, **caractérisé en ce que** deux compositions de revêtement sont appliquées simultanément ou directement l'une après l'autre en une étape de travail, une des compositions de revêtement contenant le polymère anionique et l'autre composition de revêtement contenant le polymère cationique.
